# EUROPEAN PATENT SPECIFICATION

(11) **EP 4 214 950 B1**
(45) Date of publication and mention of the grant of the patent: **19.11.2025**
(21) Application number: 21799154.6
(22) Date of filing: 15.09.2021
(51) Int. Cl.: H04W 24/02

(54) **INTER-DISTRIBUTED UNIT (INTER-DU) CROSSLINK INTERFERENCE (CLI) MEASUREMENT**
MESSUNG VON INTERVERTEILTER EINHEIT (INTERDU) ÜBER KREUZINTERFERENZ (CLI)
MESURE D'INTERFÉRENCE DE LIAISON CROISÉE (CLI) ENTRE UNITÉS DISTRIBUÉES (INTER-DU)

(30) Priority: 15.09.2020 US 202063078684 P; 15.09.2020 US 202063078685 P; 14.09.2021 US 202117447653
(43) Date of publication of application: 26.07.2023
(73) Proprietor: QUALCOMM INCORPORATED, San Diego, California 92121-1714 (US)
(72) Inventor: ABEDINI, Navid, San Diego, California 92121 (US); ZHU, Xipeng, San Diego, California 92121 (US); ZHANG, Qian, San Diego, California 92121 (US); HAMPEL, Karl Georg, San Diego, California 92121 (US); ZHOU, Yan, San Diego, California 92121 (US); LUO, Tao, San Diego, California 92121 (US); LI, Junyi, San Diego, California 92121 (US)
(74) Representative: Bardehle Pagenberg Partnerschaft mbB Patentanwälte Rechtsanwälte
(86) International application number: PCT/US2021/071465
(87) International publication number: WO 2022/061343

(56) References cited:
- EP-A1- 3 849 230
- WO-A1-2020/063736
- MODERATOR (QUALCOMM INCORPORATED): "Summary #3 of [102-e-NR-eIAB-02]", vol. RAN WG1, no. 20200817 - 20200828, 28 August 2020 (2020-08-28), XP051922850, Retrieved from the Internet <URL:https://ftp.3gpp.org/tsg_ran/WG1_RL1/TSGR1_102-e/Docs/R1-2007352.zip R1-2007352 - Summary3 of [102-e-NR-eIAB-02].docx> [retrieved on 20200828]

## Description

### FIELD OF THE DISCLOSURE

Aspects of the present disclosure generally relate to wireless communication and to techniques and apparatuses for inter-distributed unit (inter-DU) crosslink interference (CLI) measurement and reporting.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or "forward link") refers to the communication link from the BS to the UE, and "uplink" (or "reverse link") refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation.

As the demand for mobile broadband access continues to increase, further improvements in LTE, NR, and other radio access technologies remain useful.WO 2020/063736 A1 discloses an interference measurement method and apparatus. A second functional entity of a node generating interference uses one or more beams corresponding a reference signal resource identifier of a first functional entity of the node generating the interference to send a reference signal for interference measurement, so that a node which is interfered with can carry out interference measurement.

### SUMMARY

The invention is defined by the claims. The following aspects are provided for illustrative purposes. In some aspects, a method of wireless communication performed by a first base station distributed unit (DU) includes identifying, based at least in part on information associated with a second base station DU, one or more resources for crosslink interference (CLI) measurement for the second base station DU and performing one or more CLI measurements for a cell associated with the second base station DU based at least in part on the one or more resources.

In some aspects, a method of wireless communication performed by a base station central unit (CU) includes transmitting, to a first base station DU, information associated with one or more resources for CLI measurement for a second base station DU and receiving, from the first base station DU, one or more CLI measurements for a cell associated with the second base station DU based at least in part on the one or more resources.

In some aspects, a first base station DU for wireless communication includes a memory; and one or more processors coupled to the memory, the one or more processors configured to identify, based at least in part on information associated with a second base station DU, one or more resources for CLI measurement for the second base station DU and perform one or more CLI measurements for a cell associated with the second base station DU based at least in part on the one or more resources.

In some aspects, a base station CU for wireless communication includes a memory; and one or more processors coupled to the memory, the one or more processors configured to transmit, to a first base station DU, information associated with one or more resources for CLI measurement for a second base station DU and receive, from the first base station DU, one or more CLI measurements for a cell associated with the second base station DU based at least in part on the one or more resources.

In some aspects, a non-transitory computer-readable medium storing a set of instructions for wireless communication includes one or more instructions that. when executed by one or more processors of a first base station DU, cause the first base station DU to identify, based at least in part on information associated with a second base station DU, one or more resources for CLI measurement for the second base station DU and perform one or more CLI measurements for a cell associated with the second base station DU based at least in part on the one or more resources.

In some aspects, a non-transitory computer-readable medium storing a set of instructions for wireless communication includes one or more instructions that, when executed by one or more processors of a base station CU, cause the base station CU to transmit, to a first base station DU, information associated with one or more resources for CLI measurement for a second base station DU and receive, from the first base station DU, one or more CLI measurements for a cell associated with the second base station DU based at least in part on the one or more resources.

In some aspects, a first apparatus for wireless communication includes means for identifying, based at least in part on information associated with a second apparatus, one or more resources for CLI measurement for the second apparatus; and means for performing one or more CLI measurements for a cell associated with the second apparatus based at least in part on the one or more resources.

In some aspects, an apparatus for wireless communication includes means for transmitting, to a first base station DU, information associated with one or more resources for CLI measurement for a second base station DU; and means for receiving, from the first base station DU, one or more CLI measurements for a cell associated with the second base station DU based at least in part on the one or more resources.

In some aspects, a method of wireless communication performed by a first base station DU includes identifying a CLI measurement reporting configuration; configuring, based at least in part on the CLI measurement reporting configuration, a CLI measurement report to include information associated with one or more CLI measurements for a second base station DU; and transmitting the CLI measurement report.

In some aspects, a method of wireless communication performed by a base station CU includes receiving, from a first base station DU, a CLI measurement report associated with CLI measurement of a second base station DU, the CLI measurement report being based at least in part on a CLI measurement reporting configuration; and configuring communications for at least one of the first base station DU and one or more other base stations based at least in part on the CLI measurement report.

In some aspects, a first base station DU for wireless communication includes a memory; and one or more processors coupled to the memory, the one or more processors configured to: identify a CLI measurement reporting configuration; configure, based at least in part on the CLI measurement reporting configuration, a CLI measurement report to include information associated with one or more CLI measurements for a second base station DU; and transmit the CLI measurement report.

In some aspects, a base station CU for wireless communication includes a memory; and one or more processors coupled to the memory, the one or more processors configured to: receive, from a first base station DU, a CLI measurement report associated with CLI measurement of a second base station DU, the CLI measurement report being based at least in part on a CLI measurement reporting configuration; and configure communications for at least one of the first base station DU and one or more other base stations based at least in part on the CLI measurement report.

In some aspects, a non-transitory computer-readable medium storing a set of instructions for wireless communication includes one or more instructions that, when executed by one or more processors of a first base station DU, cause the first base station DU to: identify a CLI measurement reporting configuration; configure, based at least in part on the CLI measurement reporting configuration, a CLI measurement report to include information associated with one or more CLI measurements for a second base station DU; and transmit the CLI measurement report.

In some aspects, a non-transitory computer-readable medium storing a set of instructions for wireless communication includes one or more instructions that, when executed by one or more processors of a base station CU, cause the base station CU to: receive, from a first base station DU, a CLI measurement report associated with CLI measurement of a second base station DU, the CLI measurement report being based at least in part on a CLI measurement reporting configuration; and configure communications for at least one of the first base station DU and one or more other base stations based at least in part on the CLI measurement report.

In some aspects, an apparatus for wireless communication includes means for identifying a CLI measurement reporting configuration; means for configuring, based at least in part on the CLI measurement reporting configuration, a CLI measurement report to include information associated with one or more CLI measurements for a second apparatus; and means for transmitting the CLI measurement report.

In some aspects, an apparatus for wireless communication includes means for receiving, from a first base station DU, a CLI measurement report associated with CLI measurement of a second base station DU, the CLI measurement report being based at least in part on a CLI measurement reporting configuration; and means for configuring communications for at least one of the first base station DU and one or more other base stations based at least in part on the CLI measurement report.

Aspects generally include a method, apparatus, system, computer program product, non-transitory computer-readable medium, user equipment, base station, node, central unit, distributed unit, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, or artificial intelligence-enabled devices). Aspects may be implemented in chip-level components, modular components, non-modular components, non-chip-level components, device-level components, or system-level components. Devices incorporating described aspects and features may include additional components and features for implementation and practice of claimed and described aspects. For example, transmission and reception of wireless signals may include a number of components for analog and digital purposes (e.g., hardware components including antennas, radio frequency (RF) chains, power amplifiers, modulators, buffers, processor(s), interleavers, adders, or summers). It is intended that aspects described herein may be practiced in a wide variety of devices, components, systems, distributed arrangements, or end-user devices of varying size, shape, and constitution.

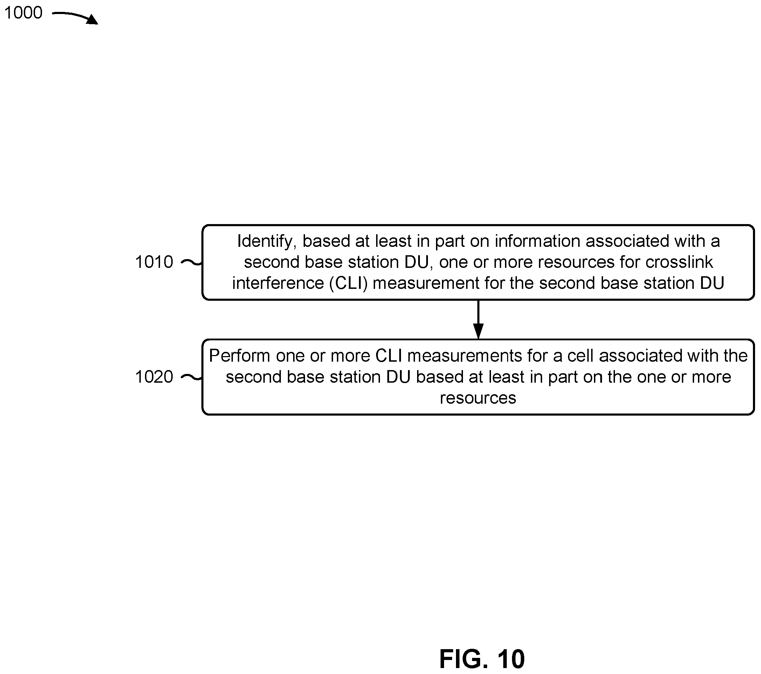

In the following, the invention is best understood in view of figure 10. The remaining embodiments, aspects and examples disclosed below are included for illustrative purposes and for facilitating the understanding of the invention.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 illustrates an example logical architecture of a distributed radio access network (RAN), in accordance with the present disclosure.
Fig. 4 illustrates an example physical architecture of a distributed RAN, in accordance with the present disclosure.
Fig. 5 is a diagram illustrating examples of RANs, in accordance with the disclosure.
Fig. 6 is a diagram illustrating an example of an integrated access and backhaul (IAB) network architecture, in accordance with the disclosure.
Fig. 7 is a diagram illustrating examples relating to inter-distributed unit (inter-DU) crosslink interference (CLI), in accordance with the present disclosure.
Figs. 8 and 9 are diagrams illustrating examples associated with inter-DU CLI measurement and reporting, in accordance with the present disclosure.
Fig. 10 is a diagram illustrating a process associated associated with inter-DU CLI measurement, in accordance with the invention.
Fig. 11 is a diagram illustrating an example process associated with inter-DU CLI measurement reporting, in accordance with the present disclosure.
Figs. 12 and 13 are block diagrams of example apparatuses for wireless communication, in accordance with the present disclosure.
Figs. 14 and 15 are diagrams illustrating examples associated with inter-DU CLI measurement and reporting, in accordance with the present disclosure.
Figs. 16 and 17 are diagrams illustrating example processes associated with inter-DU CLI measurement and reporting, in accordance with the present disclosure.
Figs. 18 and 19 are block diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

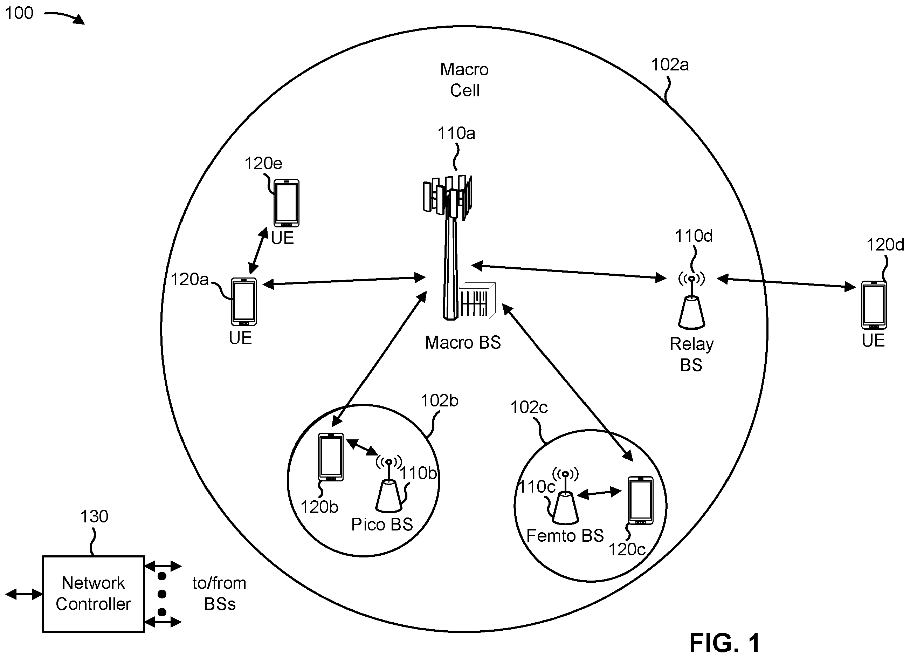

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, directly or indirectly, via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As indicated above, Fig. 1 is provided as an example. Other examples may differ from what is described with regard to Fig. 1.

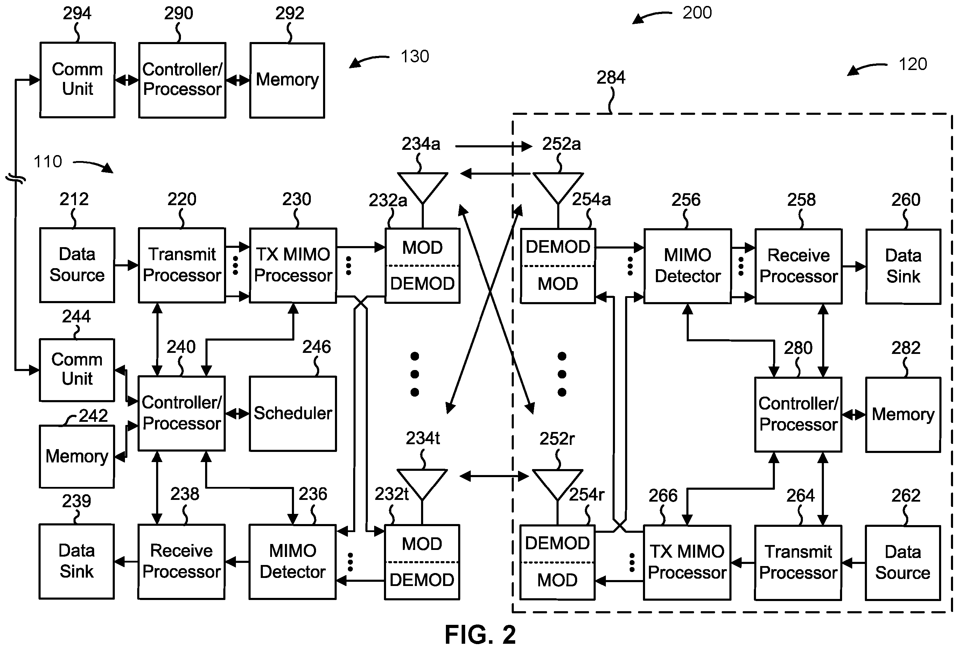

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general *T ≥* 1 and *R ≥* 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide *T* output symbol streams to *T* modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. *T* downlink signals from modulators 232a through 232t may be transmitted via *T* antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of 2.

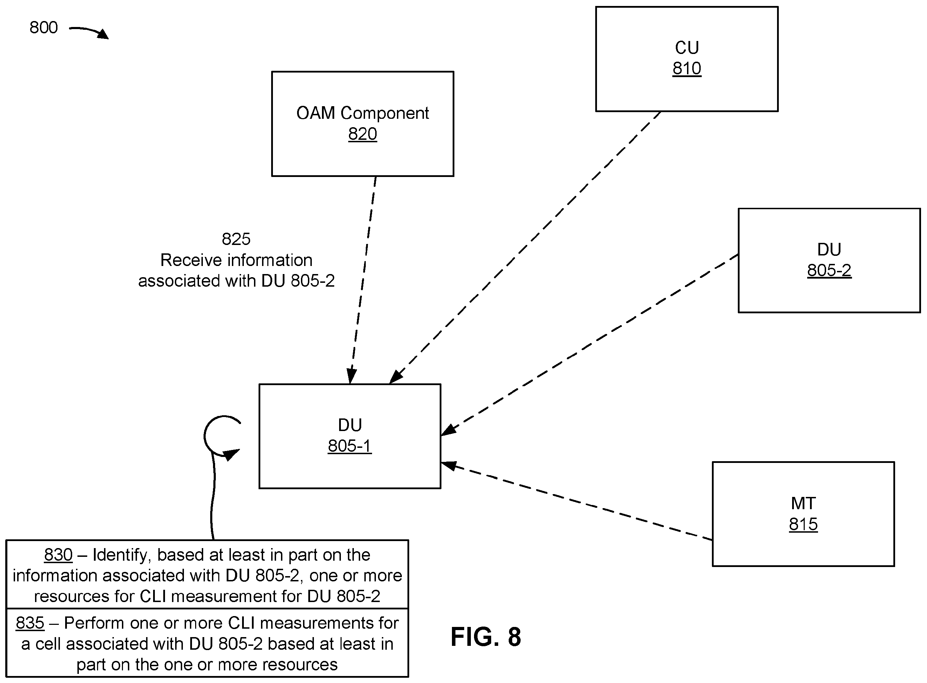

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 8-19).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 8-19).

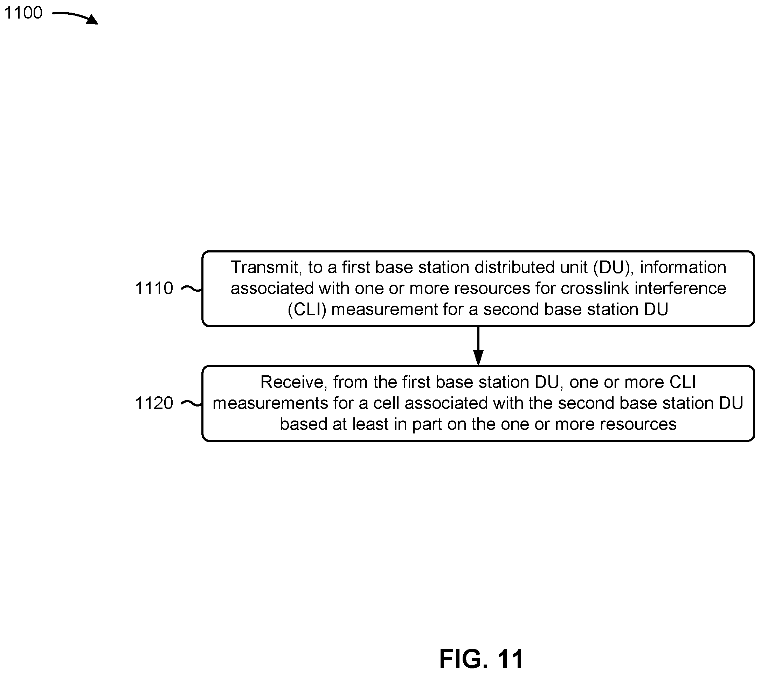

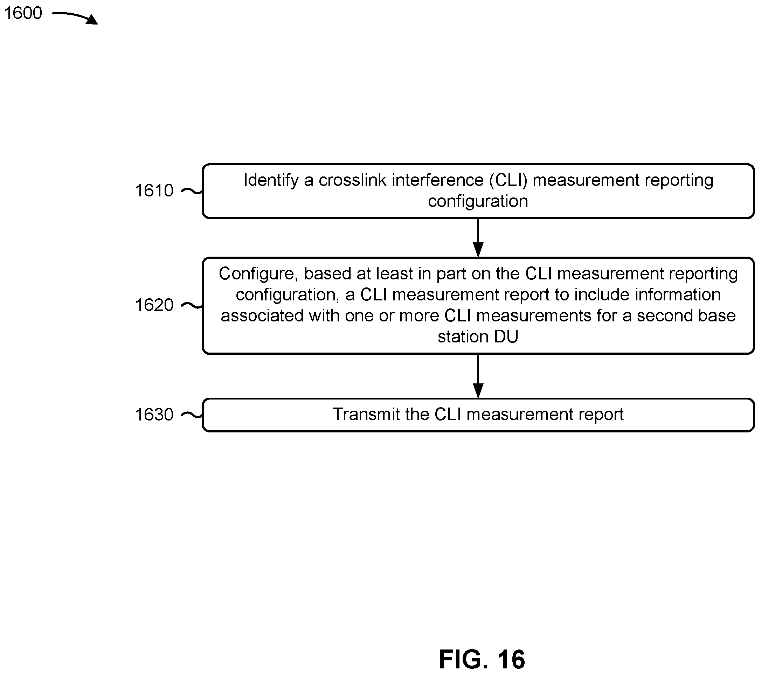

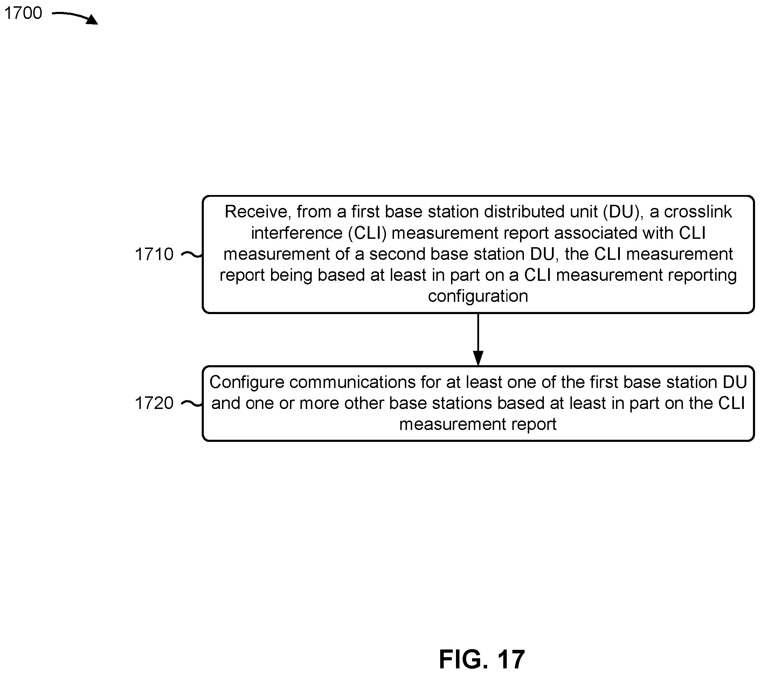

Controller/processor 240 of base station 110, controller/processor 280 of UE 120, and/or any other component(s) of Fig. 2 may perform one or more techniques associated with inter-distributed unit (inter-DU) crosslink interference (CLI) measurement and reporting, as described in more detail elsewhere herein. For example, controller/processor 240 of base station 110, controller/processor 280 of UE 120, and/or any other component(s) of Fig. 2 may perform or direct operations of, for example, process 1000 of Fig. 10, process 1100 of Fig. 11, process 1600 of Fig. 16, process 1700 of Fig. 17, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 1000 of Fig. 10, process 1100 of Fig. 11, process 1600 of Fig. 16, process 1700 of Fig. 17, and/or other processes as described herein. In some aspects, executing instructions may include running the instructions, converting the instructions, compiling the instructions, and/or interpreting the instructions, among other examples.

In some aspects, base station 110 includes means for identifying, based at least in part on information associated with a base station DU, one or more resources for CLI measurement for the base station DU; and/or means for performing one or more CLI measurements for a cell associated with the base station DU based at least in part on the one or more resources. The means for the base station 110 to perform operations described herein may include, for example, transmit processor 220, TX MIMO processor 230, modulator 232, antenna 234, demodulator 232, MIMO detector 236, receive processor 238, controller/processor 240, memory 242, and/or scheduler 246.

In some aspects, the base station 110 includes means for receiving the information identifying a time division duplexing (TDD) configuration from a base station central unit (CU). In some aspects, the base station 110 includes means for receiving system information identifying the one or more resources from the base station DU. In some aspects, the base station 110 includes means for receiving the information associated with the base station DU from a mobile terminal (MT) associated with an integrated access and backhaul (IAB) node. In some aspects, the base station 110 includes means for receiving the information associated with the base station DU in a resource configuration associated with the IAB child node. In some aspects, the base station 110 includes means for receiving the information associated with the base station DU in a resource configuration associated with the IAB parent node.

In some aspects, the base station 110 includes means for receiving one or more CLI measurement objects from a base station CU. In some aspects, the base station 110 includes means for receiving the information associated with the base station DU from an operations administration and management (OAM) component. In some aspects, the base station 110 includes means for receiving information identifying the resource configuration from a base station CU. In some aspects, the base station 110 includes means for performing the one or more CLI measurements based at least in part on one or more reference signals transmitted from the base station DU in the one or more resources.

In some aspects, the base station 110 includes means for performing one or more RSSI measurements based at least in part on one or more CLI-RSSI transmissions from the base station DU in the one or more resources. In some aspects, the base station 110 includes means for aligning a transmit schedule of the base station 110 with a transmit schedule of the cell associated with base station DU, means for aligning a receive schedule of the base station 110 with a receive schedule of the cell associated with the base station DU, means for aligning at least part of a TDD configuration of the base station 110 with a TDD configuration of the cell associated with the base station DU, means for adjusting a transmit power of one or more UEs 120 associated with the base station 110, means for adjusting a transmit power of one or more IAB child nodes of an IAB node associated with the base station 110, means for adjusting a transmit power of one or more cells associated with the base station 110, means for coordinating spatial domain resources with the cell associated with the base station 110, or means for transmitting an ultra-reliable low-latency communication (URLLC) uplink communication during a scheduled uplink resource for the cell associated with the base station DU.

In some aspects, base station 110 includes means for transmitting, to a first base station DU, information associated with one or more resources for CLI measurement for a second base station DU; and/or means for receiving, from the first base station DU, one or more CLI measurements for a cell associated with the second base station DU based at least in part on the one or more resources. The means for the base station 110 to perform operations described herein may include, for example, transmit processor 220, TX MIMO processor 230, modulator 232, antenna 234, demodulator 232, MIMO detector 236, receive processor 238, controller/processor 240, memory 242, and/or scheduler 246.

In some aspects, the base station 110 includes means for transmitting, to the second base station DU, a transmit resource configuration identifying the one or more resources for CLI measurement. In some aspects, the base station 110 includes means for coordinating the one or more resources for CLI measurement with another base station 110.

In some aspects, base station 110 includes means for identifying a CLI measurement reporting configuration; means for configuring, based at least in part on the CLI measurement reporting configuration, a CLI measurement report to include information associated with one or more CLI measurements for a base station DU; and/or means for transmitting the CLI measurement report. The means for the base station 110 to perform operations described herein may include, for example, transmit processor 220, TX MIMO processor 230, modulator 232, antenna 234, demodulator 232, MIMO detector 236, receive processor 238, controller/processor 240, memory 242, and/or scheduler 246.

In some aspects, the base station 110 includes means for receiving the CLI measurement reporting configuration from a base station CU, the base station DU, or an OAM component.

In some aspects, base station 110 includes means for receiving, from a first base station DU, a CLI measurement report associated with CLI measurement of a second base station DU, the CLI measurement report being based at least in part on a CLI measurement reporting configuration; and/or means for configuring communications for at least one of the first base station DU and one or more other base stations based at least in part on the CLI measurement report. The means for the base station 110 to perform operations described herein may include, for example, transmit processor 220, TX MIMO processor 230, modulator 232, antenna 234, demodulator 232, MIMO detector 236, receive processor 238, controller/processor 240, memory 242, and/or scheduler 246.

In some aspects, the base station 110 includes means for transmitting, to the first base station DU, the CLI measurement reporting configuration. In some aspects, the first base station DU is associated with the base station 110, the second base station DU is associated with another base station 110, and the base station 110 includes means for transmitting the CLI measurement report to at least one of the second base station DU or the other base station 110.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

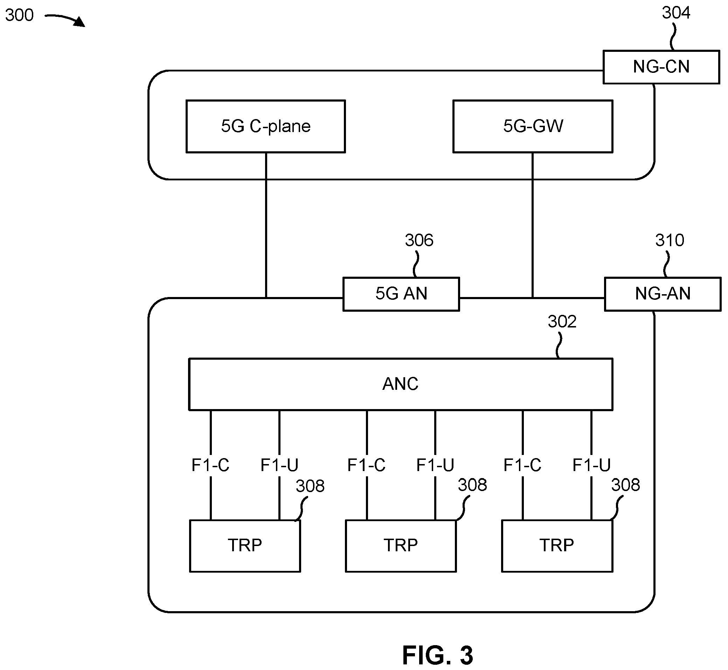

Fig. 3 illustrates an example logical architecture of a distributed RAN 300, according to aspects of the present disclosure. A 5G access node 306 may include an access node controller (ANC) 302. The ANC may be a base station CU of the distributed RAN 300. The backhaul interface to the next generation core network (NG-CN) 304 may terminate at the ANC. The backhaul interface to neighboring next generation access nodes (NG-ANs) 310 may terminate at the ANC. The ANC may include one or more TRPs 308 (which may also be referred to as BSs, NR BSs, Node Bs, 5G NBs, APs, gNB, or some other term). As described above, "TRP" may be used interchangeably with "cell."

The TRPs 308 may be a base station DU. The TRPs may be connected to one ANC (ANC 302) or more than one ANC (not illustrated). For example, for RAN sharing, radio as a service (RaaS), and service specific ANC deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture of RAN 300 may be used to illustrate fronthaul communication. The architecture may be defined to support fronthauling solutions across different deployment types. For example, the architecture may be based at least in part on transmit network capabilities (e.g., bandwidth, latency, and/or jitter).

The architecture may share features and/or components with LTE. According to aspects, the NG-AN 310 may support dual connectivity with NR. The NG-AN 310 may share a common fronthaul for LTE and NR.

The architecture may enable cooperation between and among TRPs 308. For example, cooperation may be preset within a TRP and/or across TRPs via the ANC 302. According to aspects, no inter-TRP interface may be needed/present.

According to aspects, a dynamic configuration of split logical functions may be present within the architecture of RAN 300. The packet data convergence protocol (PDCP), radio link control (RLC), or medium access control (MAC) protocol may be adaptably placed at the ANC or TRP.

According to various aspects, a base station may include a CU (e.g., ANC 302) and/or one or more DUs (e.g., one or more TRPs 308).

As indicated above, Fig. 3 is provided as an example. Other examples may differ from what is described with regard to Fig. 3.

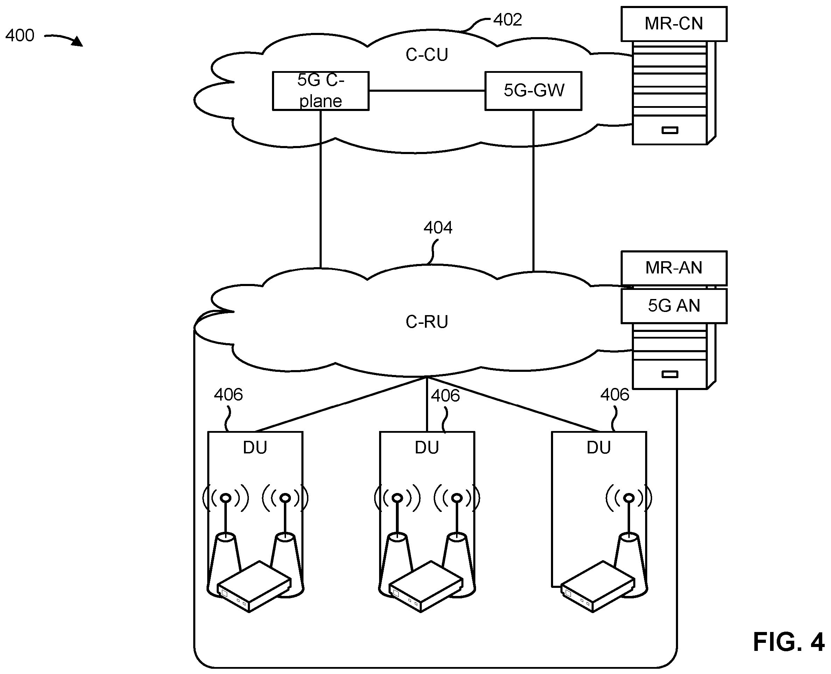

Fig. 4 illustrates an example physical architecture of a distributed RAN 400, according to aspects of the present disclosure. A centralized core network unit (C-CU) 402 may host core network functions. The C-CU may be centrally deployed. C-CU functionality may be offloaded (e.g., to advanced wireless services (AWS)), in an effort to handle peak capacity.

A centralized RAN unit (C-RU) 404 (which may also be referred to as a base station CU) may host one or more ANC functions. Optionally, the C-RU may host core network functions locally. The C-RU may have distributed deployment. The C-RU may be closer to the network edge.

A base station DU 406 may host one or more TRPs. The base station DU 406 may be located at edges of the network with radio frequency (RF) functionality.

As indicated above, Fig. 4 is provided as an example. Other examples may differ from what is described with regard to Fig. 4.

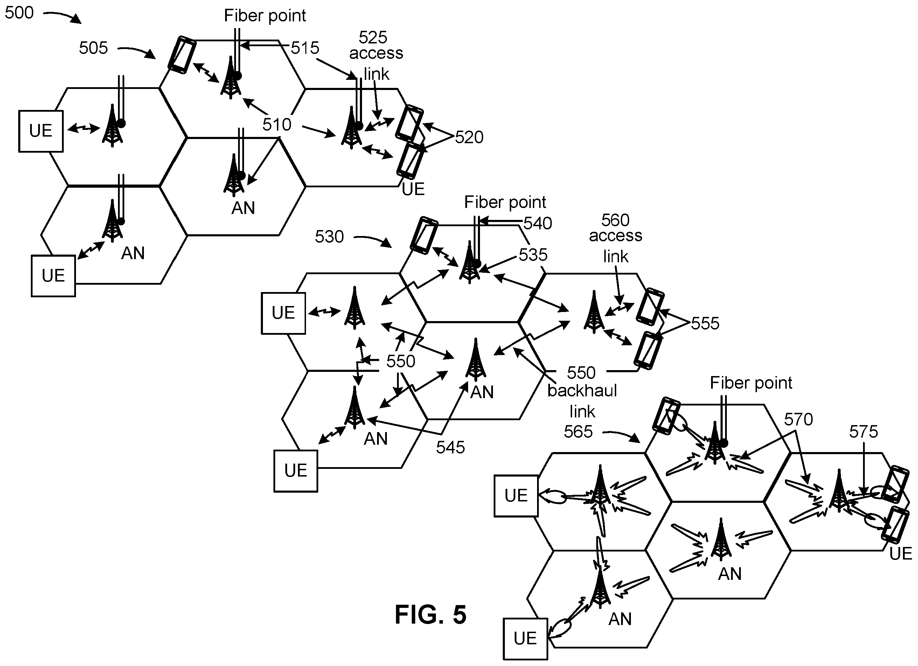

Fig. 5 is a diagram illustrating examples 500 of radio access networks, in accordance with the disclosure.

As shown by reference number 505, a traditional (e.g., 3G, 4G, LTE, and/or the like) radio access network may include multiple base stations 510 (e.g., access nodes (AN)), where each base station 510 communicates with a core network via a wired backhaul link 515, such as a fiber connection. A base station 510 may communicate with a UE 520 via an access link 525, which may be a wireless link. In some aspects, a base station 510 shown in Fig. 5 may be a base station 110 shown in Fig. 1. In some aspects, a UE 520 shown in Fig. 5 may be a UE 120 shown in Fig. 1.

As shown by reference number 530, a radio access network may include a wireless backhaul network, sometimes referred to as an IAB network. In an IAB network, at least one base station is an anchor base station 535 that communicates with a core network via a wired backhaul link 540, such as a fiber connection. An anchor base station 535 may also be referred to as an IAB donor (or IAB-donor). The IAB network may include one or more non-anchor base stations 545, sometimes referred to as relay base stations or IAB nodes (or IAB-nodes). The non-anchor base station 545 may communicate directly or indirectly with the anchor base station 535 via one or more backhaul links 550 (e.g., directly communicating with the anchor base station 535 or communicating via one or more non-anchor base stations 545) to form a backhaul path to the core network for carrying backhaul traffic. Backhaul link 550 may be a wireless link. Anchor base station(s) 535 and/or non-anchor base station(s) 545 may communicate with one or more UEs 555 via access links 560, which may be wireless links for carrying access traffic. In some aspects, an anchor base station 535 and/or a non-anchor base station 545 shown in Fig. 5 may be a base station 110 shown in Fig. 1. In some aspects, a UE 555 shown in Fig. 5 may be a UE 120 shown in Fig. 1.

As shown by reference number 565, in some aspects, a radio access network that includes an IAB network may utilize millimeter wave technology and/or directional communications (e.g., beamforming and/or the like) for communications between base stations and/or UEs (e.g., between two base stations, between two UEs, and/or between a base station and a UE). For example, wireless backhaul links 570 between base stations may use millimeter wave signals to carry information and/or may be directed toward a target base station using beamforming and/or the like. Similarly, the wireless access links 575 between a UE and a base station may use millimeter wave signals and/or may be directed toward a target wireless node (e.g., a UE and/or a base station). In this way, inter-link interference may be reduced.

The configuration of base stations and UEs in Fig. 5 is shown as an example, and other examples are contemplated. For example, one or more base stations illustrated in Fig. 5 may be replaced by one or more UEs that communicate via a UE-to-UE access network (e.g., a peer-to-peer network, a device-to-device network, and/or the like). In this case, an anchor node may refer to a UE that is directly in communication with a base station (e.g., an anchor base station or a non-anchor base station).

As indicated above, Fig. 5 is provided as an example. Other examples may differ from what is described with regard to Fig. 5.

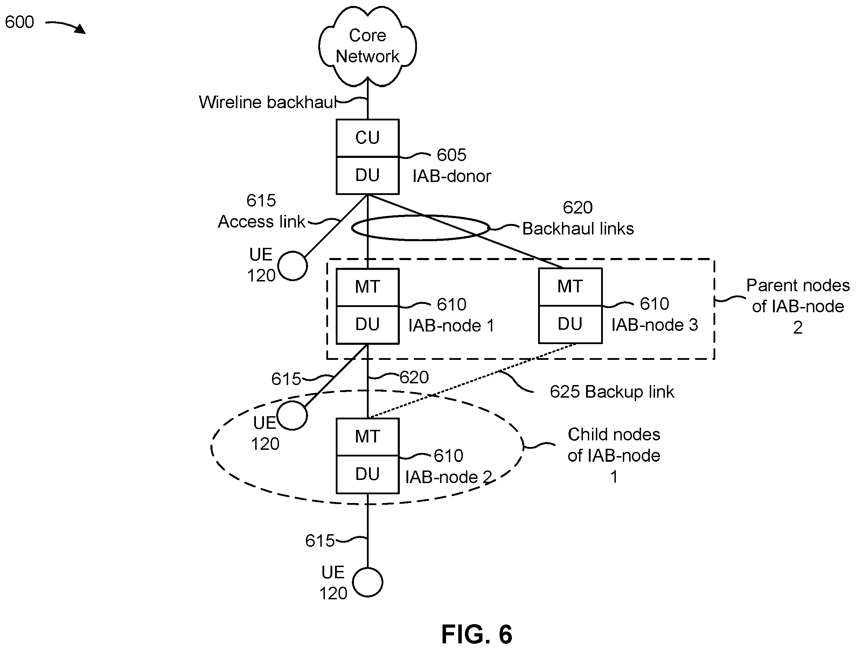

Fig. 6 is a diagram illustrating an example 600 of an IAB network architecture, in accordance with the disclosure.

As shown in Fig. 6, an IAB network may include an IAB donor 605 (shown as IAB-donor) that connects to a core network via a wired connection (shown as a wireline backhaul). For example, an Ng interface of an IAB donor 605 may terminate at a core network. Additionally, or alternatively, an IAB donor 605 may connect to one or more devices of the core network that provide a core access and mobility management function (e.g., AMF). In some aspects, an IAB donor 605 may include a base station 110, such as an anchor base station, as described above in connection with Fig. 5. As shown, an IAB donor 605 may include a CU, which may perform ANC functions, AMF functions, and/or the like. The CU may configure a DU of the IAB donor 605 and/or may configure one or more IAB nodes 610 (e.g., an MT and/or a DU of an IAB node 610) that connect to the core network via the IAB donor 605. Thus, a CU of an IAB donor 605 may control and/or configure the entire IAB network that connects to the core network via the IAB donor 605, such as by using control messages and/or configuration messages (e.g., a radio resource control (RRC) configuration message, an F1 application protocol (F1AP) message, and/or the like).

As further shown in Fig. 6, the IAB network may include IAB nodes 610 (shown as IAB-node 1, IAB-node 2, and IAB-node 3) that connect to the core network via the IAB donor 605. As shown, an IAB node 610 may include MT functions (also sometimes referred to as UE functions (UEF)) and may include DU functions (also sometimes referred to as access node functions (ANF)). The MT functions of an IAB node 610 (e.g., a child node) may be controlled and/or scheduled by another IAB node 610 (e.g., a parent node of the child node) and/or by an IAB donor 605. The DU functions of an IAB node 610 (e.g., a parent node) may control and/or schedule other IAB nodes 610 (e.g., child nodes of the parent node) and/or UEs 120. Thus, a DU may be referred to as a scheduling node or a scheduling component, and an MT may be referred to as a scheduled node or a scheduled component. In some aspects, an IAB donor 605 may include DU functions and not MT functions. That is, an IAB donor 605 may configure, control, and/or schedule communications of IAB nodes 610 and/or UEs 120. A UE 120 may include only MT functions, and not DU functions. That is, communications of a UE 120 may be controlled and/or scheduled by an IAB donor 605 and/or an IAB node 610 (e.g., a parent node of the UE 120).

When a first node controls and/or schedules communications for a second node (e.g., when the first node provides DU functions for the second node's MT functions), the first node may be referred to as a parent node of the second node, and the second node may be referred to as a child node of the first node. A child node of the second node may be referred to as a grandchild node of the first node. Thus, a DU function of a parent node may control and/or schedule communications for child nodes of the parent node. A parent node may be an IAB donor 605 or an IAB node 610, and a child node may be an IAB node 610 or a UE 120. Communications of an MT function of a child node may be controlled and/or scheduled by a parent node of the child node.

As further shown in Fig. 6, a link between a UE 120 (e.g., which only has MT functions, and not DU functions) and an IAB donor 605, or between a UE 120 and an IAB node 610, may be referred to as an access link 615. Access link 615 may be a wireless access link that provides a UE 120 with radio access to a core network via an IAB donor 605, and optionally via one or more IAB nodes 610. Thus, the network illustrated in Fig. 6 may be referred to as a multi-hop network or a wireless multi-hop network.

As further shown in Fig. 6, a link between an IAB donor 605 and an IAB node 610 or between two IAB nodes 610 may be referred to as a backhaul link 620. Backhaul link 620 may be a wireless backhaul link that provides an IAB node 610 with radio access to a core network via an IAB donor 605, and optionally via one or more other IAB nodes 610. In an IAB network, network resources for wireless communications (e.g., time resources, frequency resources, spatial resources, and/or the like) may be shared between access links 615 and backhaul links 620. In some aspects, a backhaul link 620 may be a primary backhaul link or a secondary backhaul link (e.g., a backup backhaul link). In some aspects, a secondary backhaul link 625 may be used if a primary backhaul link 620 fails, becomes congested, becomes overloaded, and/or the like. For example, a secondary backhaul link 625 between IAB-node 2 and IAB-node 3 may be used for backhaul communications if the primary backhaul link between IAB-node 2 and IAB-node 1 fails. As used herein, a node or a wireless node may refer to an IAB donor 605 or an IAB node 610.

As indicated above, Fig. 6 is provided as an example. Other examples may differ from what is described with regard to Fig. 6.

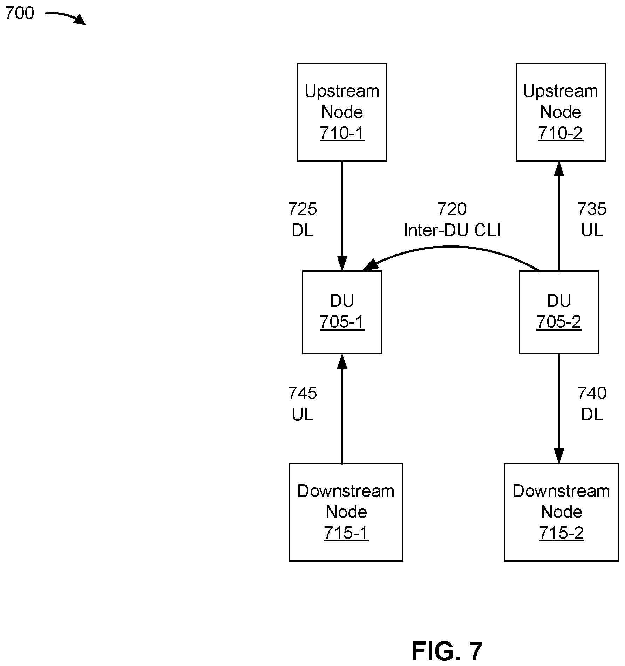

Fig. 7 is a diagram illustrating examples 700 relating to inter-DU CLI, in accordance with the present disclosure.

In dynamic TDD, the allocation of network resources to uplink and downlink may be dynamically modified depending on a traffic load. For example, a base station CU may configure a TDD configuration (e.g., a TDD pattern) with more uplink transmission time intervals (TTIs) (e.g., frames, subframes, slots, mini-slots, symbols, and/or the like) for a base station DU when the base station DU has uplink data to transmit, and may configure a TDD configuration with more downlink TTIs for the base station DU when the base station DU has downlink data to receive. The TDD configuration may be dynamically configured to modify the allocation of uplink TTIs and downlink TTIs used for communication between the base station DU and associated IAB child nodes, UEs 120, IAB parent nodes, and/or base station CUs.

As shown in Fig. 7, when neighboring base station DUs 705 use different TDD configurations to communicate with upstream nodes 710 and/or with downstream nodes 715, this may result in reception at a base station DU 705-1 that at least partially overlaps in the time domain (e.g., that occurs in a same TTI as) with transmission by a neighboring base station DU 705-2. These communications in the same TTI may interfere with one another, which may be referred to as inter-DU CLI 720.

As an example, inter-DU CLI 720 may occur at base station DU 705-1 where reception of a downlink communication 725 from an upstream node 710-1 (e.g., a DU of an IAB parent node, a base station CU, or another type of upstream node) at the base station DU 705-1 at least partially overlaps in the time domain with transmission by base station DU 705-2. The transmission may be of an uplink communication 735 to an upstream node 710-2 (which may be the same node as upstream node 710-1 or a different node, such as another IAB parent node, another base station CU, or another type of upstream node) and/or of a downlink communication 740 to a downstream node 715-2 (e.g., a DU of an IAB child node, a UE, or another type of downstream node).

As another example, inter-DU CLI 720 may occur at base station DU 705-1 where reception of an uplink communication 745 from a downstream node 715-1 (e.g., a DU of an IAB child node, a UE, or another type of upstream node) at the base station DU 705-1 at least partially overlaps in the time domain with transmission by base station DU 705-2 (e.g., transmission of uplink communication 735 and/or of downlink communication 740).

Inter-DU CLI 720 with reception of downlink communication 725 and/or uplink communication 745 can result in reception issues for these communications, such as reduced receive power for downlink communication 725 and/or uplink communication 745, difficulty in demodulating downlink communication 725 and/or uplink communication 745, decoding errors for downlink communication 725 and/or uplink communication 745, and/or other issues. These and other reception issues can result in dropped or unreceivable communications at base station DU 705-1, which can cause reception delays, reduce reliability, and/or an increase in retransmissions (which consumes additional power, memory, processing, and radio resources of base station DU 705-1 and the nodes performing the retransmissions).

As indicated above, Fig. 7 is provided as an example. Other examples are possible and may differ from what was described with respect to Fig. 7.

Some aspects described herein provide techniques and apparatuses for inter-DU CLI measurement and reporting. A first base station DU (which may be a standalone base station DU or a DU of an IAB node) is capable of performing CLI measurements for one or more cells of a second base station DU (which may be a standalone base station DU or a DU of an IAB node) to detect, measure, report, and/or mitigate inter-DU CLI caused by the second base station DU. In some aspects, the first base station DU is capable of identifying resources (e.g., time-domain resources, frequency-domain resources) in which to perform CLI measurement for the second base station DU based at least in part on information associated with the second base station DU. The information associated with the second base station DU may include information implicitly indicating the one or more resources (such as a TDD configuration for the second base station DU), may include information explicitly indicating the one or more resources (such as system information associated with the second base station DU, a CLI measurement object associated with the second base station DU, and/or other explicit indications), or a combination thereof.

In this way, the first base station DU is capable of identifying the one or more resources and performing one or more CLI measurements of the one or more cells of the second base station DU. This enables the first base station DU to report information associated with the one or more CLI measurements to an associated base station CU, to attempt to mitigate the effects of inter-DU CLI between the first base station DU and the second base station DU, and/or perform other actions based at least in part on the one or more CLI measurements. Accordingly, the one or more CLI measurements enable the first base station DU and/or other nodes (e.g., the second base station DU, the associated base station CU) to reduce, mitigate, and/or avoid the reception delays, reduce reliability, and/or an increase in retransmissions that might otherwise result from the inter-DU CLI. This decreases power, memory, processing, and radio resources of the first base station DU, the second base station DU, and/or other nodes.

Fig. 8 is a diagram illustrating one or more examples 800 associated with inter-DU CLI measurement and reporting, in accordance with the present disclosure. As shown in Fig. 8, example(s) 800 includes communication between a plurality of wireless network nodes, such as a plurality of base station DUs 805 (e.g., base station DU 805-1 and base station DU 805-2), a base station CU 810, a base station MT 815, and/or an OAM component 820. In some aspects, the nodes may be included in a wireless network, such as wireless network 100.

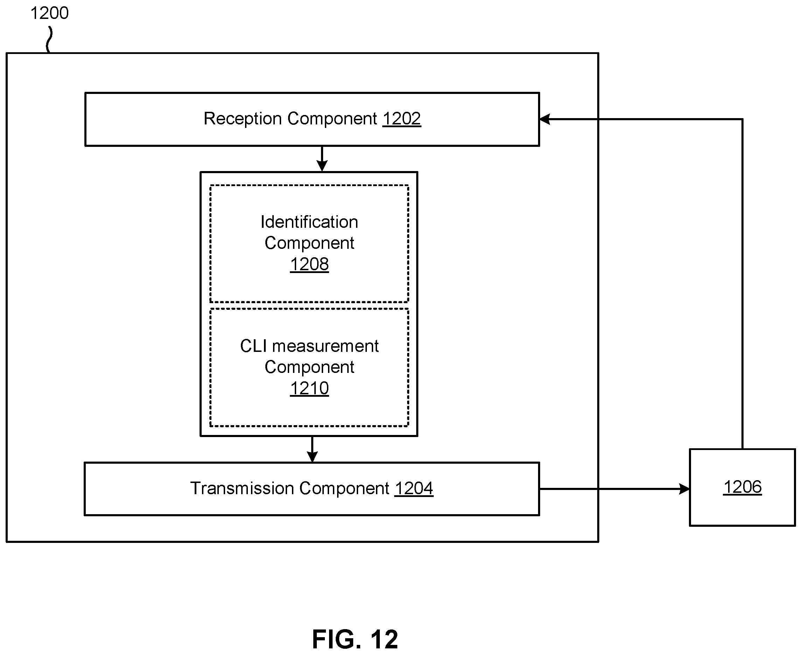

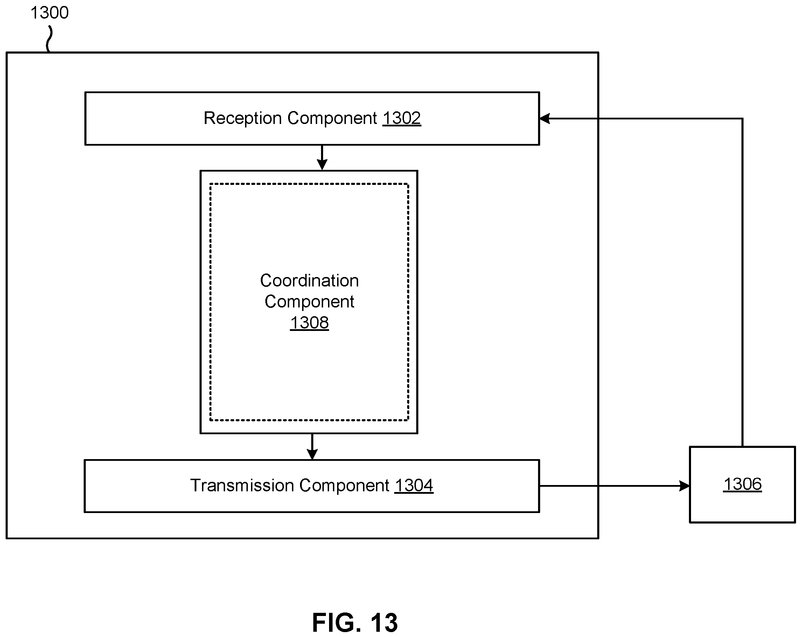

The base station DUs 805 may implement, may be implemented by, and/or may be associated with a base station 110, a TRP 308, a DU 406, a DU of a non-anchor base station 545, a DU of an IAB node 610, a DU 705, an upstream node 710, a downstream node 715, and/or apparatus 1200 of Fig. 12. Base station CU 810 may implement, may be implemented by, and/or may be associated with a base station 110, an ANC 302, a C-RU 404, an anchor base station 535, an IAB donor 605, an upstream node 710, and/or apparatus 1300 of Fig. 13. Base station MT 815 may implement, may be implemented by, and/or may be associated with a base station 110, a non-anchor base station 545, and/or an IAB node 610. OAM component 820 may implement, may be implemented by, and/or may be associated with a network controller 130. OAM component 820 may be a component that manages and coordinates processes, tools, and standards involved in operating, administering and maintaining the wireless network.

In some aspects, the base station DUs 805 and base station CU 810 are non-IAB nodes. In some aspects, the base station DUs 805, base station CU 810, and base station MT 815 are included in an IAB network such as one or more of the IAB networks illustrated and described above in connection with Fig. 5 and/or Fig. 6. In these examples, base station DU 805-1 and base station MT 815 may be associated with the same IAB node, base station DU 805-1 and base station DU 805-2 may be associated with different IAB nodes, and base station CU 810 may be associated with an IAB donor. In some aspects, base station DU 805-1 is associated with an IAB child node of the IAB parent node associated with base station DU 805-2. In some aspects, base station DU 805-2 is associated with an IAB child node of the IAB parent node associated with base station DU 805-1.

Base station DU 805-1 may be located near base station DU 805-2 such that transmissions by base station DU 805-2 in one or more cells of base station DU 805-2 may cause inter-DU CLI with reception by base station DU 805-1 in one or more cells of base station DU 805-1. Accordingly, base station DU 805-1 may be configured to perform CLI measurements of transmissions by base station DU 805-2 (e.g., inter-DU CLI measurements). In some aspects, base station DU 805-1 is configured by base station CU 810 to perform CLI measurements. In some aspects, base station DU 805-1 autonomously performs the CLI measurements.

As shown in Fig. 8, and by reference number 825, base station DU 805-1 may receive information associated with base station DU 805-2 from one or more nodes, such as base station DU 805-2, base station CU 810, base station MT 815, and/or OAM component 820. Additionally, and/or alternatively, base station DU 805-1 may be configured with the information associated with base station DU 805-2 without signaling from other nodes. In these examples, base station DU 805-1 may be configured with the information associated with base station DU 805-2 prior to or at the time of deployment in the wireless network.

As further shown in Fig. 8, and by reference number 830, base station DU 805-1 may identify one or more resources for CLI measurement for base station DU 805-2 based at least in part on the information associated with base station DU 805-2. The one or more resources may include one or more time-domain resources (e.g., symbols, slots, subframes, radio frames, and/or other time-domain resources), one or more frequency-domain resources (e.g., resource elements, resource blocks, frequency bands, subcarriers, and/or other frequency-domain resources), one or more transmission types (e.g., reference signals, CLI-received signal strength indicator (CLI-RSSI) transmissions), and/or other types of resources for which base station DU 805-2 is to perform transmissions for CLI measurement.

In some aspects, the information associated with base station DU 805-2 includes a TDD configuration for one or more cells associated with base station DU 805-2. In these examples, base station DU 805-1 may receive information identifying the TDD configuration from base station CU 810. Base station DU 805-1 may identify the one or more resources by identifying the TTIs in which base station DU 805-2 is to transmit indicated in the TDD configuration.

In some aspects, the information associated with base station DU 805-2 includes system information transmitted by base station DU 805-2. In these examples, base station DU 805-1 may receive the system information from base station DU 805-2 in one or more system information transmissions, such as one or more synchronization signal blocks (SSBs), one or more master information blocks (MIBs), one or more system information blocks (SIBs), other system information (OSI), remaining minimum system information (RMSI), and/or other types of system information. Base station DU 805-1 may identify the one or more resources based at least in part on an indication of the one or more resources in the system information.

In some aspects, the information associated with base station DU 805-2 includes one or more CLI measurement objects for one or more cells associated with base station DU 805-2. In these examples, the base station DU 805-1 may receive the one or more CLI measurement objects from base station CU 810. Base station DU 805-1 may identify the one or more resources based at least in part on an indication of the one or more resources in the one or more CLI measurement objects.

A CLI measurement object may include a configuration of one or more parameters for performing one or more CLI measurements of inter-DU CLI, one or more parameters for transmissions from base station DU 805-2 that are to be measured for CLI measurement for base station DU 805-2, and/or other parameters. The one or more CLI measurement objects may identify the one or more resources (e.g., the one or more time-domain resources and/or the one or more frequency domain resources), may identify a measurement window in which base station DU 805-1 is to perform CLI measurement of one or more cells of base station DU 805-2 (e.g., a starting time-domain resource, an ending time-domain resource, a time duration, a periodicity, and/or other parameter for the measurement window), a subcarrier spacing (SCS) for one or more cells of the base station DU 805-2 in which base station DU 805-1 is to perform CLI measurements, a reference signal configuration for the one or more cells of base station DU 805-2, cell identifiers associated with each of the one or more cells of base station DU 805-2 in which CLI measurement is to be performed, an index of SSBs transmitted from base station DU 805-2, and/or other parameters.

The reference signal configuration may identify the type of reference signal that base station DU 805-1 is to measure for CLI measurement. The types of reference signals may include SSBs, channel state information reference signals (CSI-RSs), remote interference management reference signals (RIM-RSs), phase tracking reference signals (PTRSs), DMRSs, and/or other types of reference signals. In some aspects, the one or more CLI measurement objects may further identify one or more transmit beams that base station 805-2 is to use to transmit in the one or more resources. In these examples, the indication may be an explicit indication of the one or more transmit beams, may implicitly indicate the one or more beams by indicating a quasi-co-location (QCL) reference to one or more SSB indexes, or may indicate the one or more transmit beams using another type of indication.

In some aspects, base station DU 805-1 may receive the information associated with base station DU 805-2 from OAM component 820. In these examples, base station DU 805-1 may receive the information associated with base station DU 805-2 from OAM component 820 via an OAM interface, which may be a communication interface configured for messaging nodes in the wireless network and/or retrieving performance indicator data generated by the nodes the wireless network.

In some aspects, the information associated with base station DU 805-2 includes a resource configuration for the one or more cells of base station DU 805-2. In these examples, base station DU 805-1 may receive information identifying the resource configuration from base station CU 810. The resource configuration may include a transmit resource configuration, which may be an SSB transmission configuration (STC) or a similar type of transmission configuration for base station DU 805-2. Base station DU 805-1 may identify the one or more resources based at least in part on an indication of the one or more resources in the resource configuration.

As indicated above, in some aspects, base station DU 805-1 is a DU associated with an IAB node. Base station MT 815 may be an MT associated with the IAB node and may be co-located with base station DU 805-1. In these examples, base station DU 805-1 may receive the information associated with base station DU 805-2 from base station MT 815. In some aspects, base station MT 815 receive the information associated with base station DU 805-2 in an SSB measurement timing configuration (SMTC) for base station DU 805-2 for radio resource management (RRM) measurements for the one or more cells of base station DU 805-2. In some aspects, base station MT 815 may acquire the information associated with base station DU 805-2 by performing inter-node discovery to detect and/or measure the one or more cells of base station DU 805-2. Accordingly, the base station MT 815 may provide the information associated with base station DU 805-2 via a local connection with base station DU 805-1.

Additionally, and/or alternatively, base station DU 805-2 may also be a DU associated with another IAB node. In these examples, the IAB node associated with base station DU 805-1 may be an IAB parent node or an IAB child node of the IAB node associated with base station DU 805-2. The IAB nodes may exchange resource and/or configuration information as part of the IAB child-parent configuration, which may include the information associated with base station DU 805-2, as well as other information such as allocated DU cell resources (e.g. indicating Hard, Soft, Not-available and/or Uplink, Downlink, Flexible resources), resources and/or configurations of SSBs, reference signals, control resource sets (CORESETs), and/or other types of information.

As further shown in Fig. 8, and by reference number 835, base station DU 805-1 may perform one or more CLI measurements for a cell associated with base station DU 805-2 based at least in part on the one or more resources identified in the information associated with base station DU 805-2. In some aspects, base station DU 805-1 performs one or more CLI measurements for a plurality of cells associated with base station DU 805-2. The one or more CLI measurements may include RSSI measurements, RSRP measurements, RSRQ measurements, CQI measurements, signal-to-noise (SNR) measurements, signal to interference plus noise (SINR) measurements, and/or other types of signal measurements.

Base station DU 805-1 may perform the one or more CLI measurements of one or more communications transmitted in the using the one or more resources. The one or more communications may include CLI-RSSI transmissions (e.g., physical downlink shared channel (PDSCH) transmissions, physical downlink control channel (PDCCH) transmissions, physical uplink shared channel transmissions (PUSCH) transmissions, physical uplink control channel (PUCCH) transmissions), may include reference signal transmissions (e.g., SSBs, CSI-RSs, RIM-RSs, PTRSs, DMRSs), and/or other types of transmissions. The one or more communications may be transmitted in one or more time-domain resources, one or more frequency-domain resources, on one or more transmit beams, and/or may be transmitted according to other parameters indicated in and/or by the information associated with base station DU 805-2.

In some aspects, base station DU 805-1 may transmit results of the one or more CLI measurements and/or other information associated with the one or more CLI measurements to base station DU 805-2, base station CU 810, OAM component 820, and/or other nodes. Additionally. and/or alternatively, base station DU 805-1 may automatically perform one or more actions to reduce, mitigate, and/or eliminate inter-DU CLI between base station DU 805-1 and base station DU 805-2. For example, base station DU 805-1 may align a transmit schedule of base station DU 805-1 with a transmit schedule of the cell associated with base station DU 805-1 for which the one or more CLI measurements were performed. As another example, base station DU 805-1 may align a receive schedule of base station DU 805-1 with a receive schedule of the cell associated with base station DU 805-2 for which the one or more CLI measurements were performed. As another example, base station DU 805-1 may a TDD configuration of base station DU 805-1 with a TDD configuration of the cell associated with base station DU 805-2 for which the one or more CLI measurements were performed such that base station DU 805-1 and base station DU 805-2 transmit at similar times and/or receive at similar times.

As another example, base station DU 805-1 may adjust a transmit power of one or more cells and/or one or more UEs 120 and/or one or more IAB child nodes of an IAB node associated with base station DU 805-1. As another example, base station DU 805-1 may coordinate, with base station DU 805-2, spatial domain resources for the cell associated with base station DU 805-2 for which the one or more CLI measurements were performed. As another example, base station DU 805-1 may schedule a URLLC uplink communication or a URLLC downlink communication during a scheduled transmit resource (e.g., a scheduled uplink transmit resource or a scheduled downlink transmit resource) for the cell associated with base station DU 805-2 for which the one or more CLI measurements were performed. As another example, base station DU 805-1 may schedule one or more types of uplink communication such as random access channel (RACH), service request (SR), sounding reference signal (SRS), and/or a PDCCH during a schedule transmit resource for the cell associated with base station DU 805-2 for which the one or more CLI measurements were performed.

As indicated above, Fig. 8 is provided as one or more examples. Other examples may differ from what is described with respect to Fig. 8.

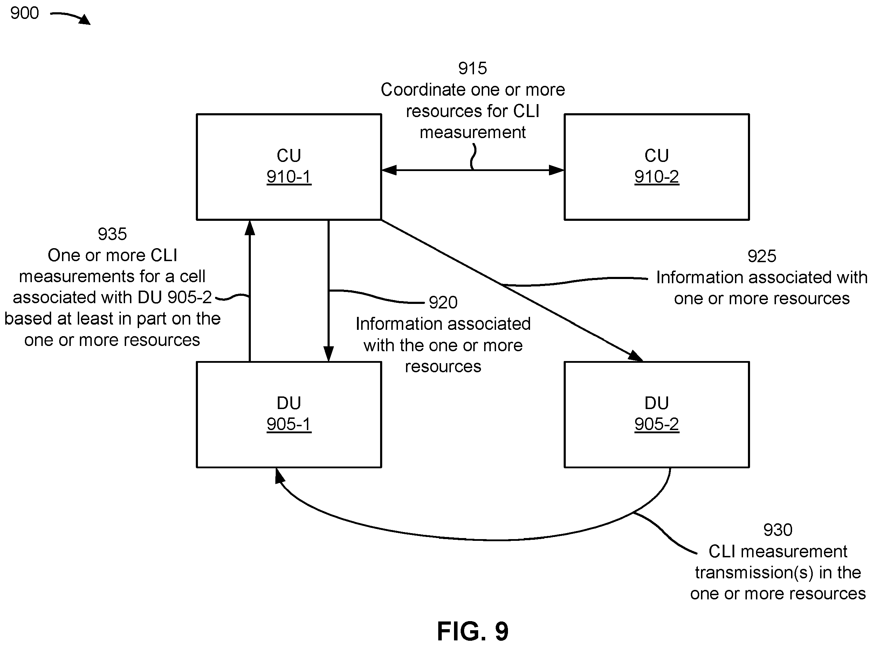

Fig. 9 is a diagram illustrating one or more examples 900 associated with inter-DU CLI measurement and reporting, in accordance with the present disclosure. As shown in Fig. 9, example(s) 900 includes communication between a plurality of wireless network nodes, such as a plurality of base station DUs 905 (e.g., base station DU 905-1 and base station DU 905-2) and a plurality of base station CUs 910 (e.g., base station CU 910-1 and base station CU 910-2). In some aspects, the nodes may be included in a wireless network, such as wireless network 100.

The base station DUs 905 may implement, may be implemented by, and/or may be associated with a base station 110, a TRP 308, a DU 406, a DU of a non-anchor base station 545, a DU of an IAB node 610, a DU 705, an upstream node 710, a downstream node 715, and/or apparatus 1200 of Fig. 12. The base station CUs 910 may implement, may be implemented by, and/or may be associated with a base station 110, an ANC 302, a C-RU 404, an anchor base station 535, an IAB donor 605, an upstream node 710, and/or apparatus 1300 of Fig. 13.

In some aspects, the base station DUs 905 and the base station CUs 910 are non-IAB nodes. In some aspects, the base station DUs 905 and/or the base station CUs 910 are included in an IAB network such as one or more of the IAB networks illustrated and described above in connection with Fig. 5 and/or Fig. 6. In these examples, base station DU 905-1 and base station DU 905-2 may be associated with different IAB nodes, and base station CU 910-1 and base station CU 910-2 may be associated with different IAB donors. In some aspects, base station CU 910-1 is associated with an IAB donor for the IAB nodes of base station DU 905-1 and base station DU 905-1. In some aspects, base station CU 910-1 is associated with an IAB donor for the IAB node of base station DU 905-1, and base station CU 910-1 is associated with a different IAB donor for the IAB node of base station DU 905-2.

Base station DU 905-1 may be located near base station DU 905-2 such that transmissions by base station DU 905-2 in one or more cells of base station DU 905-2 may cause inter-DU CLI with reception by base station DU 905-1 in one or more cells of base station DU 902-1. Accordingly, base station DU 905-1 may be configured to perform CLI measurements of transmissions by base station DU 905-2 (e.g., inter-DU CLI measurements). In some aspects, base station DU 905-1 is configured by base station CU 910-1 to perform CLI measurements. In some aspects, base station DU 905-1 autonomously performs the CLI measurements. In some aspects, base station DU 905-2 is configured by base station CU 910-1 and/or base station CU 910-2 to perform transmissions for which base station DU 905-2 is to perform the CLI measurements.

As shown in Fig. 9, and by reference number 915, base station CU 910-1 and base station CU 910-2 may coordinate one or more resources for CLI measurement. For example, base station CU 910-1 and base station CU 910-2 may coordinate the time-domain resources and/or the frequency-domain resources in which base station DU 905-2 is to perform transmissions for CLI measurement and in which base station DU 905-1 is to perform CLI measurements for the transmissions. In some aspects, base station CU 910-1 and base station CU 910-2 coordinate additional parameters for CLI measurement, such the beams on which base station DU 905-2 is to perform the transmissions, the cells in which base station DU 905-2 is to perform the transmissions, the types of CLI measurements base station DU 905-1 is to perform, and/or other parameters described above in connection with Fig. 8.

As further shown in Fig. 9, and by reference number 920, base station CU 910-1 may transmit information identifying the one or more resources (and, in some examples, the other parameters) to base station DU 905-1. In some aspects, base station CU 910-1 transmits the information identifying the one or more resources to base station DU 905-1 in information associated with base station DU 905-2, as described above in connection with Fig. 8.

As further shown in Fig. 9, and by reference number 925, base station CU 910-1 may transmit information identifying the one or more resources (and, in some examples, the other parameters) to base station DU 905-2. In some aspects, base station CU 910-1 transmits the information identifying the one or more resources to base station DU 905-2 in a transmit resource configuration that includes an indication of the one or more resources (and, in some examples, the other parameters) to configure base station DU 905-2 to perform the transmission for CLI measurement. The resource configuration may include a transmit resource configuration, which may be an STC or a similar type of transmission configuration. In some aspects, base station CU 910-1 transmits the information identifying the one or more resources directly to base station DU 905-2. In some aspects, base station CU 910-1 transmits the information identifying the one or more resources to base station DU 905-2 through one or more intervening nodes, such as one or more other base station DUs, base station CU 910-2 (e.g., via an Xn interface), and/or other nodes.

As further shown in Fig. 9, and by reference number 930, base station DU 905-2 may perform one or more transmissions (e.g., CLI measurement transmissions) in the one or more resources. The one or more transmissions may include one or more reference signal types described above, one or more CLI-RSSI transmission types described above, and/or other types of transmissions.

As further shown in Fig. 9, and by reference number 935, base station DU 905-1 may perform one or more CLI measurements of the one or more transmissions based at least in part on the information received from base station CU 910-1. The one or more CLI measurements may include one or more measurement types described above, such as RSSI measurements, RSRP measurements, CQI measurements, SNR measurements, SINR measurement, and/or other types of signal measurements. Base station DU 905-1 may transmit results of the one or more CLI measurements (and, in some examples, other information associated with the one or more CLI measurements) in a CLI measurement report to base station CU 910-1.

As indicated above, Fig. 9 is provided as one or more examples. Other examples may differ from what is described with respect to Fig. 9.

Fig. 10 is a diagram illustrating a process 1000 performed by a first base station DU, in accordance with the the invention. In process 1000, the first base station DU (e.g., a base station 110, a TRP 308, a DU 406, a DU of a non-anchor base station 545, a DU of an IAB node 610, a DU 705, an upstream node 710, a downstream node 715, a DU 805, a DU 905, and/or apparatus 1200) performs operations associated with Inter-DU CLI measurement and may perform operations associated with Inter-DU CLI reporting.

As shown in Fig. 10, process 1000 includes identifying, based at least in part on information associated with a second base station DU, one or more resources for CLI measurement for the second base station DU (block 1010). The first base station DU (e.g., using identification component 1208, depicted in Fig. 12) identifies, based at least in part on information associated with a second base station DU, one or more resources for CLI measurement for the second base station DU, as described above.

As further shown in Fig. 10, process 1000 includes performing one or more CLI measurements for a cell associated with the second base station DU based at least in part on the one or more resources (block 1020). The first base station DU (e.g., using CLI measurement component 1210, depicted in Fig. 12) performs one or more CLI measurements for a cell associated with the second base station DU based at least in part on the one or more resources, as described above.

Process 1000 may include additional aspects, such as any single aspect or any combination of aspects described below and/or in connection with one or more other processes described elsewhere herein.

In a first aspect, the information associated with the second base station DU comprises information identifying a TDD configuration for the cell associated with the second base station DU, and process 1000 includes receiving (e.g., using reception component 1202, depicted in Fig. 12) the information identifying the TDD configuration from a base station CU. Alone or in combination with the first aspect, the information associated with the second base station DU comprises information identifying the one or more resources, and process 1000 includes receiving (e.g., using reception component 1202, depicted in Fig. 12) the system information from the second base station DU in at least one of a MIB or a SIB.

In a third aspect, alone or in combination with one or more of the first and second aspects, the first base station DU is associated with an IAB node, and process 1000 includes receiving (e.g., using reception component 1202, depicted in Fig. 12) the information associated with the second base station DU by an MT associated with the IAB node. In a fourth aspect, alone or in combination with one or more of the first through third aspects, the first base station DU is associated with an IAB parent node, wherein the second base station DU is associated with an IAB child node of the IAB parent node, and process 1000 includes receiving (e.g., using reception component 1202, depicted in Fig. 12) the information associated with the second base station DU in a resource configuration associated with the IAB child node.

In a fifth aspect, alone or in combination with one or more of the first through fourth aspects, the first base station DU is associated with an IAB child node, wherein the second base station DU is associated with an IAB parent node of the IAB child node, and process 1000 includes receiving (e.g., using reception component 1202, depicted in Fig. 12) the information associated with the second base station DU in a resource configuration associated with the IAB parent node. In a sixth aspect, alone or in combination with one or more of the first through fifth aspects, the information associated with the second base station DU comprises one or more CLI measurement objects for the cell associated with the second base station DU, and process 1000 includes receiving (e.g., using reception component 1202, depicted in Fig. 12) the one or more CLI measurement objects from a base station CU.

In a seventh aspect, alone or in combination with one or more of the first through sixth aspects, the one or more CLI measurement objects identify at least one of the one or more resources, a measurement window for the one or more CLI measurements, an SCS for the cell associated with the second base station DU, a reference signal configuration associated with the second base station DU, a cell identifier associated with the second base station DU, or an index of transmitted SSBs associated with the second base station DU. In an eighth aspect, alone or in combination with one or more of the first through seventh aspects, process 1000 includes receiving (e.g., using reception component 1202, depicted in Fig. 12) the information associated with the second base station DU from an OAM component.

In a ninth aspect, alone or in combination with one or more of the first through eighth aspects, the information associated with the second base station DU comprises information identifying a resource configuration for the cell associated with the second base station DU, and process 1000 includes receiving (e.g., using reception component 1202, depicted in Fig. 12) the information identifying the resource configuration from a base station CU. In a tenth aspect, alone or in combination with one or more of the first through ninth aspects, performing the one or more CLI measurements comprises performing the one or more CLI measurements based at least in part on one or more reference signals transmitted from the second base station DU in the one or more resources, wherein the one or more reference signals comprise at least one of an SSB, a CSI-RS, an RIM-RS, a PTRS, or a DMRS.

In an eleventh aspect, alone or in combination with one or more of the first through tenth aspects, performing the one or more CLI measurements comprises performing one or more RSSI measurements based at least in part on one or more CLI-RSSI transmissions from the second base station DU in the one or more resources. In a twelfth aspect, alone or in combination with one or more of the first through eleventh aspects, process 1000 includes performing (e.g., using reception component 1202, transmission component 1204, and/or identification component 1208, depicted in Fig. 12) one or more CLI mitigation actions based at least in part on the one or more CLI measurements, wherein the one or more CLI mitigation actions comprise at least one of aligning a transmit schedule of the first base station DU with a transmit schedule of the cell associated with second base station DU, aligning a receive schedule of the first base station DU with a receive schedule of the cell associated with the second base station DU, aligning at least part of a TDD configuration of the first base station DU with a TDD configuration of the cell associated with the second base station DU, adjusting a transmit power of one or more UEs associated with the first base station DU, adjusting a transmit power of one or more IAB child nodes of an IAB node associated with the first base station DU, adjusting a transmit power of one or more cells associated with the first base station DU, coordinating spatial domain resources with the cell associated with the second base station DU, or transmitting an URLLC uplink communication during a scheduled uplink resource for the cell associated with the second base station.

Although Fig. 10 shows example blocks of process 1000, in some aspects, process 1000 may include additional blocks, fewer blocks, different blocks, or differently arranged blocks than those depicted in Fig. 10. Additionally, or alternatively, two or more of the blocks of process 1000 may be performed in parallel.

Fig. 11 is a diagram illustrating an example process 1100 performed, for example, by a base station CU, in accordance with the present disclosure. Example process 1100 is an example where the base station CU (e.g., a base station 110, an ANC 302, a C-RU 404, an anchor base station 535, an IAB donor 605, an upstream node 710, and/or apparatus 1300) performs operations associated with inter-DU CLI measurement and reporting.

As shown in Fig. 11, in some aspects, process 1100 may include transmitting, to a first base station DU, information associated with one or more resources for CLI measurement for a second base station DU (block 1110). For example, the base station CU (e.g., using transmission component 1304, depicted in Fig. 13) may transmit, to a first base station DU, information associated with one or more resources for CLI measurement for a second base station DU, as described above.

As further shown in Fig. 11, in some aspects, process 1100 may include receiving, from the first base station DU, one or more CLI measurements for a cell associated with the second base station DU based at least in part on the one or more resources (block 1120). For example, the base station CU (e.g., using reception component 1302, depicted in Fig. 13) may receive, from the first base station DU, one or more CLI measurements for a cell associated with the second base station DU based at least in part on the one or more resources, as described above.

Process 1100 may include additional aspects, such as any single aspect or any combination of aspects described below and/or in connection with one or more other processes described elsewhere herein.

In a first aspect, the information associated with the second base station DU comprises information identifying a TDD configuration for the cell associated with the second base station DU. In a second aspect, alone or in combination with the first aspect, the information associated with the second base station DU comprises one or more CLI measurement objects for the cell associated with the second base station DU.

In a third aspect, alone or in combination with one or more of the first and second aspects, the information associated with the second base station DU comprises information identifying a resource configuration for the cell associated with the second base station DU. In a fourth aspect, alone or in combination with one or more of the first through third aspects, process 1100 includes transmitting (e.g., using transmission component 1304, depicted in Fig. 13), to the second base station DU, a transmit resource configuration identifying the one or more resources for CLI measurement.

In a fifth aspect, alone or in combination with one or more of the first through fourth aspects, the transmit resource configuration identifies one or more transmit beam on which the second base station DU is to perform one or more CLI transmissions in the one or more resources. In a sixth aspect, alone or in combination with one or more of the first through fifth aspects, the first base station DU is associated with the base station CU, wherein the second base station DU is associated with another base station CU, and process 1100 includes coordinating (e.g., using coordination component 1308, depicted in Fig. 13) the one or more resources for CLI measurement with the other base station CU.

Although Fig. 11 shows example blocks of process 1100, in some aspects, process 1100 may include additional blocks, fewer blocks, different blocks, or differently arranged blocks than those depicted in Fig. 11. Additionally, or alternatively, two or more of the blocks of process 1100 may be performed in parallel.

Fig. 12 is a block diagram of an example apparatus 1200 for wireless communication. The apparatus 1200 may be a base station DU, or a base station DU may include the apparatus 1200. In some aspects, the apparatus 1200 includes a reception component 1202 and a transmission component 1204, which may be in communication with one another (for example, via one or more buses and/or one or more other components). As shown, the apparatus 1200 may communicate with another apparatus 1206 (such as a UE, a base station, or another wireless communication device) using the reception component 1202 and the transmission component 1204. As further shown, the apparatus 1200 may include one or more of an identification component 1208 and/or a CLI measurement component 1210, among other examples.

In some aspects, the apparatus 1200 may be configured to perform one or more operations described herein in connection with Figs. 8 and/or 9. Additionally, or alternatively, the apparatus 1200 may be configured to perform one or more processes described herein, such as process 1000 of Fig. 10. In some aspects, the apparatus 1200 and/or one or more components shown in Fig. 12 may include one or more components of the base station described above in connection with Fig. 2. Additionally, or alternatively, one or more components shown in Fig. 12 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1202 may receive communications, such as reference signals, control information, data communications, or a combination thereof, from the apparatus 1206. The reception component 1202 may provide received communications to one or more other components of the apparatus 1200. In some aspects, the reception component 1202 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1206. In some aspects, the reception component 1202 may include one or more antennas, a demodulator, a MIMO detector, a receive processor, a controller/processor, a memory, or a combination thereof, of the base station described above in connection with Fig. 2.

The transmission component 1204 may transmit communications, such as reference signals, control information, data communications, or a combination thereof, to the apparatus 1206. In some aspects, one or more other components of the apparatus 1206 may generate communications and may provide the generated communications to the transmission component 1204 for transmission to the apparatus 1206. In some aspects, the transmission component 1204 may perform signal processing on the generated communications (such as filtering, amplification, modulation, digital-to-analog conversion, multiplexing, interleaving, mapping, or encoding, among other examples), and may transmit the processed signals to the apparatus 1206. In some aspects, the transmission component 1204 may include one or more antennas, a modulator, a transmit MIMO processor, a transmit processor, a controller/processor, a memory, or a combination thereof, of the base station described above in connection with Fig. 2. In some aspects, the transmission component 1204 may be collocated with the reception component 1202 in a transceiver.

The identification component 1208 may identify, based at least in part on information associated with the apparatus 1206, one or more resources for CLI measurement for the apparatus 1206. In some aspects, the identification component 1208 may include one or more a receive processor, a transmit processor, a controller/processor, a memory, or a combination thereof, of the base station described above in connection with Fig. 2. The CLI measurement component 1210 may perform one or more CLI measurements for a cell associated with the apparatus 1206 based at least in part on the one or more resources. In some aspects, the CLI measurement component 1210 may include one or more antennas, a demodulator, a MIMO detector, a receive processor, a modulator, a transmit MIMO processor, a transmit processor, a controller/processor, a memory, or a combination thereof, of the base station described above in connection with Fig. 2.

The reception component 1202 may receive the information associated with the apparatus 1206 from OAM component. The reception component 1202 may receive the information associated with the apparatus 1206 from a base station CU, where the information associated with the apparatus 1206 includes information identifying a TDD configuration and/or one or more CLI measurement objects associated with the apparatus 1206. The reception component 1202 may receive the information associated with the apparatus 1206 from the apparatus 1206, where the information associated with the apparatus 1206 includes system information identifying the one or more resources. The reception component 1202 may receive the information associated with the apparatus 1206 from a MT associated with an IAB node. The reception component 1202 may receive the information associated with the apparatus 1206 in a resource configuration associated with an IAB parent node or in a resource configuration associated with an IAB child node. The reception component 1202, the transmission component 1204, and/or the identification component 1208 may perform one or more CLI mitigation actions based at least in part on the one or more CLI measurements.

The number and arrangement of components shown in Fig. 12 are provided as an example. In practice, there may be additional components, fewer components, different components, or differently arranged components than those shown in Fig. 12. Furthermore, two or more components shown in Fig. 12 may be implemented within a single component, or a single component shown in Fig. 12 may be implemented as multiple, distributed components. Additionally, or alternatively, a set of (one or more) components shown in Fig. 12 may perform one or more functions described as being performed by another set of components shown in Fig. 12.

Fig. 13 is a block diagram of an example apparatus 1300 for wireless communication. The apparatus 1300 may be a base station CU, or a base station CU may include the apparatus 1300. In some aspects, the apparatus 1300 includes a reception component 1302 and a transmission component 1304, which may be in communication with one another (for example, via one or more buses and/or one or more other components). As shown, the apparatus 1300 may communicate with another apparatus 1306 (such as a UE, a base station, or another wireless communication device) using the reception component 1302 and the transmission component 1304. As further shown, the apparatus 1300 may include one or more of a coordination component 1308.

In some aspects, the apparatus 1300 may be configured to perform one or more operations described herein in connection with Figs. 8 and/or 9. Additionally, or alternatively, the apparatus 1300 may be configured to perform one or more processes described herein, such as process 1100 of Fig. 11. In some aspects, the apparatus 1300 and/or one or more components shown in Fig. 13 may include one or more components of the base station described above in connection with Fig. 2. Additionally, or alternatively, one or more components shown in Fig. 13 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1302 may receive communications, such as reference signals, control information, data communications, or a combination thereof, from the apparatus 1306. The reception component 1302 may provide received communications to one or more other components of the apparatus 1300. In some aspects, the reception component 1302 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1306. In some aspects, the reception component 1302 may include one or more antennas, a demodulator, a MIMO detector, a receive processor, a controller/processor, a memory, or a combination thereof, of the base station described above in connection with Fig. 2.

The transmission component 1304 may transmit communications, such as reference signals, control information, data communications, or a combination thereof, to the apparatus 1306. In some aspects, one or more other components of the apparatus 1306 may generate communications and may provide the generated communications to the transmission component 1304 for transmission to the apparatus 1306. In some aspects, the transmission component 1304 may perform signal processing on the generated communications (such as filtering, amplification, modulation, digital-to-analog conversion, multiplexing, interleaving, mapping, or encoding, among other examples), and may transmit the processed signals to the apparatus 1306. In some aspects, the transmission component 1304 may include one or more antennas, a modulator, a transmit MIMO processor, a transmit processor, a controller/processor, a memory, or a combination thereof, of the base station described above in connection with Fig. 2. In some aspects, the transmission component 1304 may be collocated with the reception component 1302 in a transceiver.

The transmission component 1304 may transmit, to the apparatus 1306, information associated with one or more resources for CLI measurement for a base station DU. The reception component 1302 may receive, from the apparatus 1306, one or more CLI measurements for a cell associated with the base station DU based at least in part on the one or more resources. The transmission component 1304 may transmit, to the base station DU, a transmit resource configuration identifying the one or more resources for CLI measurement. The coordination component 1308 may coordinate the one or more resources for CLI measurement with a base station CU. In some aspects, the coordination component 1308 may include one or more antennas, a demodulator, a MIMO detector, a receive processor, a modulator, a transmit MIMO processor, a transmit processor, a controller/processor, a memory, or a combination thereof, of the base station described above in connection with Fig. 2.

The number and arrangement of components shown in Fig. 13 are provided as an example. In practice, there may be additional components, fewer components, different components, or differently arranged components than those shown in Fig. 13. Furthermore, two or more components shown in Fig. 13 may be implemented within a single component, or a single component shown in Fig. 13 may be implemented as multiple, distributed components. Additionally, or alternatively, a set of (one or more) components shown in Fig. 13 may perform one or more functions described as being performed by another set of components shown in Fig. 13.

Some aspects described herein provide techniques and apparatuses for inter-DU CLI measurement and reporting. A base station CU may be capable of providing a CLI measurement reporting configuration to a first base station DU (which may be a DU of a non-IAB base station or a DU of an IAB node). The CLI measurement reporting configuration may indicate one or more parameters for performing one or more CLI measurements associated with a second base station DU (which may be a DU of a non-IAB base station or a DU of an IAB node), one or more parameters for configuring a CLI measurement report for the one or more CLI measurements, and/or one or more parameters for transmitting the CLI measurement report.

In this way, the first base station DU may be capable of performing the one or more CLI measurements, capable of configuring the CLI measurement report for the one or more CLI measurements, and/or capable of transmitting the CLI measurement report based at least in part on the CLI measurement reporting configuration. The base station CU may receive the CLI measurement report and may configure communications for the first base station DU, the second base station DU, and/or one or more other base stations to reduce, mitigate, and/or avoid the reception delays; to improve reliability; and/or to decrease a quantity of retransmissions that might otherwise result from the inter-DU CLI. This conserves power, memory, processing, and radio resources of the first base station DU, the second base station DU, and/or other nodes.

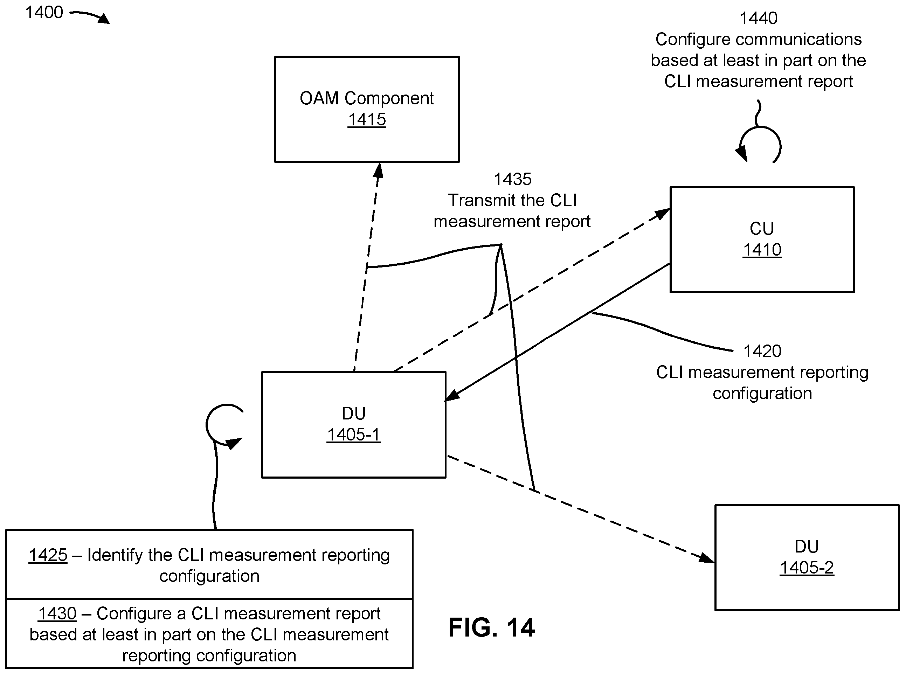

Fig. 14 is a diagram illustrating one or more examples 1400 associated with inter-DU CLI measurement and reporting, in accordance with the present disclosure. As shown in Fig. 14, example(s) 1400 includes communication between a plurality of wireless network nodes, such as a plurality of base station DUs 1405 (e.g., base station DU 1405-1 and base station DU 1405-2), a base station CU 1410, and/or an OAM component 1415. In some aspects, the nodes may be included in a wireless network, such as wireless network 100.

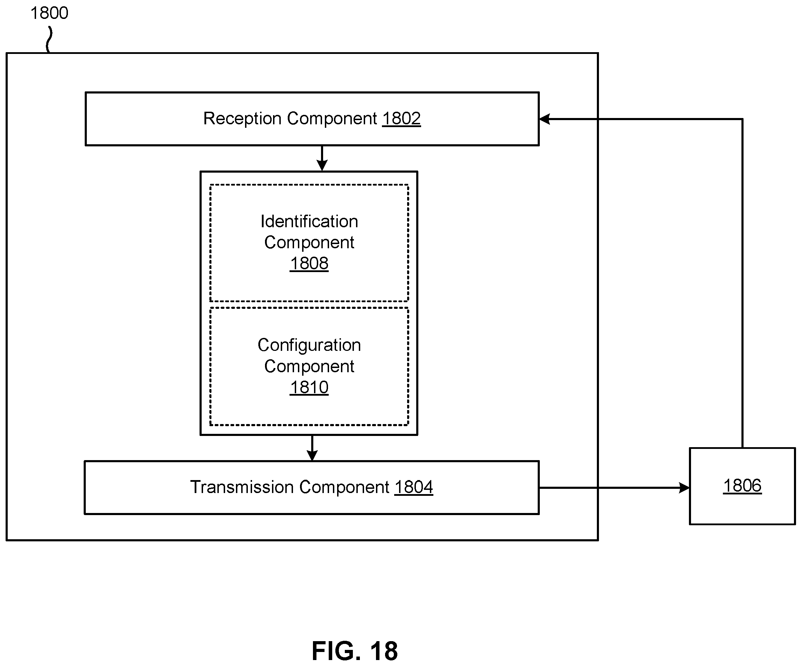

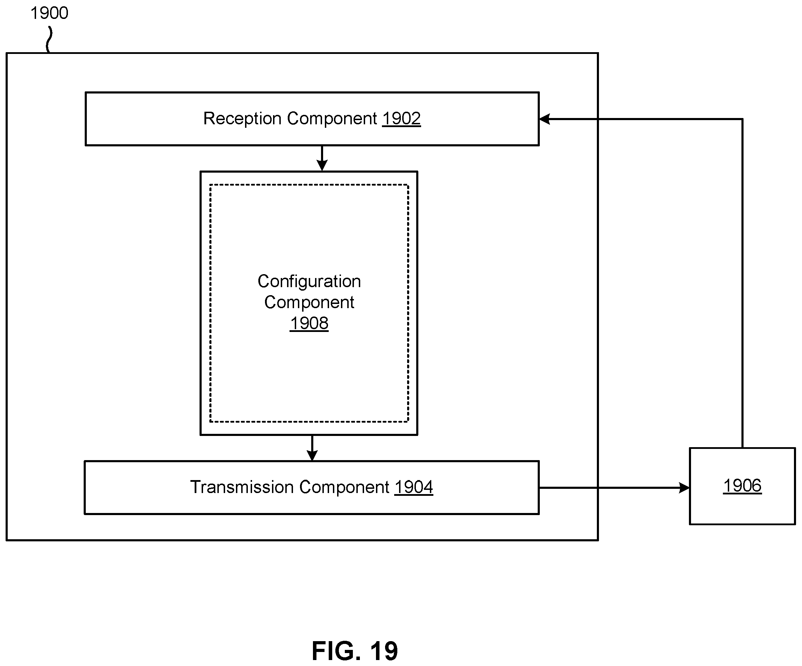

The base station DUs 1405 may implement, may be implemented by, and/or may be associated with a base station 110, a TRP 308, a DU 406, a DU of a non-anchor base station 545, a DU of an IAB node 610, a DU 705, an upstream node 710, a downstream node 715, and/or an apparatus 1800 of Fig. 18. Base station CU 1410 may implement, may be implemented by, and/or may be associated with a base station 110, an ANC 302, a C-RU 404, an anchor base station 535, an IAB donor 605, an upstream node 710, and/or an apparatus 1900 of Fig. 19. OAM component 1415 may implement, may be implemented by, and/or may be associated with a network controller 130. OAM component 1415 may be a component that manages and coordinates processes, tools, and standards involved in operating, administering, and maintaining the wireless network.

In some aspects, the base station DUs 1405 and base station CU 1410 are non-IAB nodes. In some aspects, the base station DUs 1405, and base station CU 1410 are included in an IAB network such as one or more of the IAB networks illustrated and described above in connection with Fig. 5 and/or Fig. 6. In these examples, base station DU 1405-1 and a base station MT may be associated with the same IAB node, base station DU 1405-1 and base station DU 1405-2 may be associated with different IAB nodes, and base station CU 1410 may be associated with an IAB donor. In some aspects, base station DU 1405-1 is associated with an IAB child node of the IAB parent node associated with base station DU 1405-2. In some aspects, base station DU 1405-2 is associated with an IAB child node of the IAB parent node associated with base station DU 1405-1.

Base station DU 1405-1 may be located near base station DU 1405-2 such that transmissions by base station DU 1405-2 in one or more cells of base station DU 1405-2 may cause inter-DU CLI with reception by base station DU 1405-1 in one or more cells of base station DU 1405-1. Accordingly, base station DU 1405-1 may be configured to perform CLI measurements of transmissions by base station DU 1405-2 (e.g., inter-DU CLI measurements). In some aspects, base station DU 1405-1 is configured by base station CU 1410 to perform CLI measurements. In some aspects, base station DU 1405-1 autonomously performs the CLI measurements.

As shown in Fig. 14, and by reference number 1420, base station CU 1410 may transmit a CLI measurement reporting configuration to base station DU 1405-1 and base station DU 1405-1 may receive the CLI measurement reporting configuration. Additionally, and/or alternatively, base station DU 1405-1 may receive the CLI measurement reporting configuration from base station DU 1405-2 or OAM component 1415. Additionally, and/or alternatively, base station DU 1405-1 may be configured with the CLI measurement reporting configuration without signaling from other nodes. In these examples, base station DU 1405-1 may be configured with the CLI measurement reporting configuration prior to or at the time of deployment in the wireless network.

The CLI measurement reporting configuration may indicate one or more parameters for performing one or more CLI measurements (e.g., for inter-DU CLI), one or more parameters for configuring a CLI measurement report for the one or more CLI measurements, one or more parameters for transmitting the CLI measurement report, and/or one or more other CLI measurement parameters. For example, the CLI measurement reporting configuration may indicate the base station DUs and associated cells for which base station DU 1405-1 is to perform the one or more CLI measurements. As another example, the CLI measurement reporting configuration may indicate the receive beams that base station DU 1405-1 is to use for performing the one or more CLI measurements. As another example, the CLI measurement reporting configuration may indicate the transmits beams that base station DU 1405-2 is to use to transmit reference signals or other CLI measurement transmissions for the one or more CLI measurements (e.g., by indicating an SSB index, a CSI-RS index, or a CLI-RSSI resource identifier).

As another example, the CLI measurement reporting configuration may indicate the resources (e.g., time-domain resources, frequency-domain resources) in which base station DU 1405-1 is to perform the one or more CLI measurements (e.g., which may be indicated by one or more CLI measurement objects). As another example, the CLI measurement reporting configuration may indicate the resources (e.g., time-domain resources, frequency-domain resources) that base station DU 1405-1 is to use to transmit CLI measurement reports. As another example, the CLI measurement reporting configuration may include a CLI measurement filtering parameter that indicates how base station DU 1405-1 is to filter CLI measurements.

In some aspects, the CLI measurement reporting configuration indicates that base station DU 1405-1 is to report CLI measurements and associated information for all the base station DUs and associated cells for which base station DU 1405-1 is to perform CLI measurements. In some aspects, the CLI measurement reporting configuration indicates that base station DU 1405-1 is to report CLI measurements and associated information for the K strongest aggressor cells of the base station DUs and associated cells for which base station DU 1405-1 is to perform CLI measurements (e.g., which may be determined based at least in part on RSSI or another signal strength CLI measurement). In some aspects, the CLI measurement reporting configuration indicates that base station DU 1405-1 is to report CLI measurements and associated information for the M weakest aggressor cells of the base station DUs and associated cells for which base station DU 1405-1 is to perform CLI measurements (e.g., which may be determined based at least in part on RSSI or another signal strength CLI measurement).

In some aspects, the CLI measurement reporting configuration indicates that base station DU 1405-1 is to report CLI measurements and associated information for a particular quantity of base station DUs and associated cells for which base station DU 1405-1 is to perform CLI measurements. (e.g., where the base station DUs and associated cells are selected by base station DU 1405-1). As another example, the CLI measurement reporting configuration may indicate that base station DU 1405-1 is to report CLI measurements and associated information for the base station DUs and associated cells for which a corresponding CLI measurement satisfies a measurement threshold (e.g., an RSSI threshold, an RSRP threshold, a CQI threshold, an SNR threshold, an SINR threshold, and/or another signal measurement or interference threshold).

In some aspects, the CLI measurement reporting configuration indicates that base station DU 1405-1 is to report the results of the one or more CLI measurements performed for the base station DUs and the associated cells indicated in the CLI measurement reporting configuration. In some aspects, the CLI measurement reporting configuration indicates the type of CLI measurements that are to be performed, such as RSSI measurements, RSRP measurements, CQI measurements, SNR measurements, SINR measurements, and/or other types of signal measurements. In some aspects, the CLI measurement reporting configuration indicates that base station DU 1405-1 is to report propagation delay and/or round-trip time (RTT) information associated with the base station DUs and associated cells for which base station DU 1405-1 is to perform CLI measurements.

In some aspects, the CLI measurement reporting configuration indicates that base station DU 1405-1 is to report an interference level category (e.g., a level of inter-DU CLI) for each base station DU and associated cell which base station DU 1405-1 is to perform CLI measurements. Each interference level category (e.g., low, medium, high) may correspond to a respective signal measurement range or interference range. The interference level category for a particular base station DU and an associated cell may be determined based at least in part on the one or more CLI measurements for the cell and the base station DU. In some aspects, the CLI measurement reporting configuration indicates a reporting frequency for base station DU 1405-1 to transmit CLI measurement reports. For example, the CLI measurement reporting configuration may indicate that base station DU 1405-1 is to transmit a periodic or semi-persistent CLI measurement report (e.g., at a particular time interval), an event-triggered CLI measurement report (e.g., based at least in part on the occurrence of a particular event), or a dynamic CLI measurement report (e.g., a one-time or non-recurring CLI measurement report).

As further shown in Fig. 14, and by reference number 1425, base station DU 1405-1 may identify the CLI measurement reporting configuration. In some aspects, base station DU 1405-1 identifies the CLI measurement reporting configuration based at least in part on receiving the CLI measurement reporting configuration from base station CU 1410. In some aspects, base station DU 1405-1 identifies the CLI measurement reporting configuration based at least in part on being configured with the CLI measurement reporting configuration (e.g., without additional signaling from base station CU 1410).

As further shown in Fig. 14, and by reference number 1430, base station DU 1405-1 may configure a CLI measurement report for one or more CLI measurements associated with base station DU 1405-2 based at least in part on the CLI measurement reporting configuration. In some aspects, base station DU 1405-1 may further perform the one or more CLI measurements based at least in part on the CLI measurement reporting configuration. In these examples, base station DU 1405-1 performs the one or more CLI measurements for the cells of base station DU 1405-2 identified in the CLI measurement reporting configuration, performs the one or more CLI measurements in the one or more resources identified in the CLI measurement reporting configuration, performs the one or more CLI measurement types identified in the CLI measurement reporting configuration, performs the one or more CLI measurements using the receive beam(s) and/or based at least in part on the transmit beam(s) indicated in the CLI measurement report, and/or filters the one or more CLI measurements based at least in part on the CLI measurement filtering parameter in the CLI measurement reporting configuration.

In some aspects, base station DU 1405-1 configures the CLI measurement report to include the results of the one or more CLI measurements based at least in part on the CLI measurement reporting configuration. In some aspects, base station DU 1405-1 configures the CLI measurement report to include an indication of one or more measurement types for the one or more CLI measurements (e.g., RSSI measurements, RSRP measurements, CQI measurements, SNR measurements, SINR measurements, and/or one or more other types of measurements) based at least in part on the CLI measurement reporting configuration. In some aspects, base station DU 1405-1 configures the CLI measurement report to include an identifier of each cell (and an identifier of the associated measurement resource) associated with base station DU 1405-2 for which a corresponding CLI measurement satisfies a measurement threshold (e.g., an RSSI measurement threshold, an RSRP measurement threshold, a CQI measurement threshold, an SNR measurement threshold, an SINR measurement threshold, and/or another type of measurement threshold) based at least in part on the CLI measurement reporting configuration.

In some aspects, base station DU 1405-1 configures the CLI measurement report to include an indication of the one or more receive beams used for the one or more CLI measurements based at least in part on the CLI measurement reporting configuration. In some aspects, base station DU 1405-1 configures the CLI measurement report to include an indication of the one or more transmit beams associated with base station DU 1405-2 that were used for one or more transmissions associated with the one or more CLI measurements based at least in part on the CLI measurement reporting configuration. In some aspects, base station DU 1405-1 configures the CLI measurement report to include an indication of an estimated propagation delay between base station DU 1405-1 and base station DU 1405-2 based at least in part on the CLI measurement reporting configuration.

In some aspects, base station DU 1405-1 configures the CLI measurement report to include an indication of an estimated RTT between base station DU 1405-1 and base station DU 1405-2 based at least in part on the CLI measurement reporting configuration. In some aspects, base station DU 1405-1 configures the CLI measurement report to include an indication of an interference level category (e.g., low, medium, or high) for base station DU 1405-2 based at least in part on the CLI measurement reporting configuration. In some aspects, base station DU 1405-1 configures the CLI measurement report to include an indication of a particular quantity of the strongest aggressor cells (e.g., K strongest aggressor cells) of base station DU 1405-2 based at least in part on the CLI measurement reporting configuration. In some aspects, base station DU 1405-1 configures the CLI measurement report to include an indication of a particular quantity of the weakest aggressor cells (e.g., M weakest aggressor cells) of base station DU 1405-2 based at least in part on the CLI measurement reporting configuration. In some aspects, base station DU 1405-1 configures the CLI measurement report to include an indication of a particular quantity of cells of base station DU 1405-2, selected by base station DU 1405-1, based at least in part on the CLI measurement reporting configuration.

In some aspects, base station DU 1405-1 configures the CLI measurement report to include an indication of one or more recommended parameters for itself and/or base station DU 1405-2 to mitigate, reduce, and/or eliminate inter-DU CLI between base station DU 1405-1 and base station DU 1405-2. The one or more recommended parameters may include, for example, a power adjustment parameter for itself and/or base station DU 1405-2 for various time-domain resources and/or frequency-domain resources and/or in various spatial directions. As another example, the one or more recommended parameters may indicate to base station DU 1405-2 to avoid transmitting communications in particular time-domain resources and/or frequency-domain resources and/or in particular spatial directions. As another example, the one or more recommended parameters may indicate particular time-domain resources and/or frequency-domain resources and/or in particular spatial directions over which base station DU 1405-1 should avoid any communication. As another example, the one or more recommended parameters may indicate a resource and/or configuration of one or more reference signals to be communicated by base station DU 1405-1 and/or base station DU 1405-2 (e.g. to orthogonalize the reference signals associated with different DUs). As another example, the one or more recommended parameters may indicate a timing adjustment associated with base station DU 1405-1 and/or base station DU 1405-2 (e.g. to align the timing of communications associated with the two base station DUs).

As another example, the one or more recommended parameters may indicate a recommended reference signal configuration to orthogonalize reference signals transmitted by base station DU 1405-1 and base station DU 1405-2. As another example, the one or more recommended parameters may indicate a timing adjustment recommendation to align the timing of multiple communications in the same direction for base station DU 1405-1 and base station DU 1405-2 (e.g., to align uplink communications for base station DU 1405-1 and base station DU 1405-2 and/or to align downlink communications for base station DU 1405-1 and base station DU 1405-2).

As further shown in Fig. 14, and by reference number 1435, base station DU 1405-1 may transmit the CLI measurement report to base station CU 1410 (and, in some cases, to base station DU 1405-2 and/or OAM component 1415). In some aspects, base station DU 1405-1 transmits a periodic CLI measurement report, an event-triggered CLI measurement report, a semi-persistent CLI measurement report, or a dynamic CLI measurement report based at least in part on the CLI measurement reporting configuration. In some aspects, base station DU 1405-1 may transmit the CLI measurement report in the resources indicated in the CLI measurement reporting configuration for transmitting the CLI measurement report.

As indicated above, base station DU 1405-1, base station DU 1405-2, and/or base station CU 1410 may be included in an IAB network. In some aspects, base station DU 1405-1 transmits the CLI measurement report to base station CU 1410 (which may be part of an IAB donor associated with the IAB node in which base station DU 1405-1 is included). In some aspects, base station DU 1405-1 transmits the CLI measurement report to a base station CU associated with base station DU 1405-2. In some aspects, base station DU 1405-1 transmits the CLI measurement report to base station DU 1405-2 directly between IAB nodes, such as between an IAB parent node and an IAB child node. In these examples, base station DU 1405-1 may be associated with the IAB parent node and base station DU 1405-2 may be associated with the IAB child node, or base station DU 1405-2 may be associated with the IAB parent node and base station DU 1405-1 may be associated with the IAB child node.

As further shown in Fig. 14, and by reference number 1440, base station CU 1410 may configure communications for base station DU 1405-1, base station DU 1405-2, and/or one or more other nodes in the wireless network to reduce, mitigate, and/or eliminate inter-DU CLI between base station DU 1405-1 and base station DU 1405-2. For example, base station CU 1410 may align a transmit schedule of base station DU 1405-1 and a transmit schedule of the cell associated with base station DU 1405-2 for which the one or more CLI measurements were performed. As another example, base station CU 1410 may align a receive schedule of base station DU 1405-1 and a receive schedule of the cell associated with base station DU 1405-2 for which the one or more CLI measurements were performed. As another example, base station CU 1410 may align a TDD configuration of base station DU 1405-1 and a TDD configuration of the cell associated with base station DU 1405-2 for which the one or more CLI measurements were performed such that base station DU 1405-1 and base station DU 1405-2 transmit at similar times and/or receive at similar times.

As another example, base station CU 1410 may instruct base station DU 1405-1 to adjust a transmit power of one or more UEs 120 and/or one or more IAB child nodes of an IAB node associated with base station DU 1405-1. As another example, base station CU 1410 may coordinate spatial domain resources for base station DU 1405-1 and a cell of base station DU 1405-2 for which the one or more CLI measurements were performed. As another example, base station CU 1410 may schedule base station DU 1405-1 to transmit a URLLC as an uplink communication or a URLLC as a downlink communication during a scheduled transmit resource (e.g., a scheduled uplink transmit resource or a scheduled downlink transmit resource) for the cell associated with base station DU 1405-2 for which the one or more CLI measurements were performed.

As indicated above, Fig. 14 is provided as one or more examples. Other examples may differ from what is described with respect to Fig. 14.

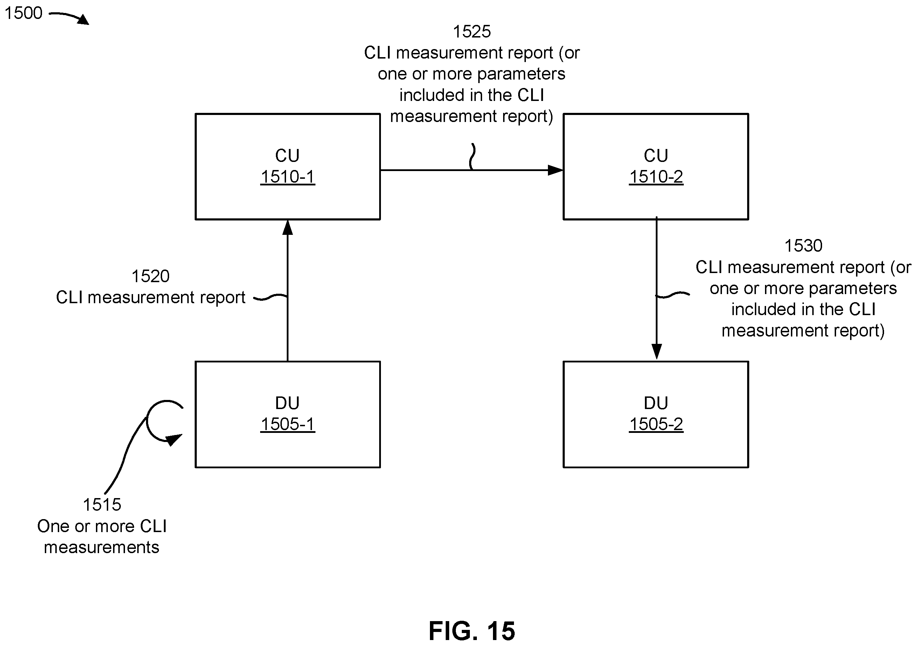

Fig. 15 is a diagram illustrating one or more examples 1500 associated with inter-DU CLI measurement and reporting, in accordance with the present disclosure. As shown in Fig. 15, example(s) 1500 includes communication between a plurality of wireless network nodes, such as a plurality of base station DUs 1505 (e.g., base station DU 1505-1 and base station DU 1505-2) and a plurality of base station CUs 1510 (e.g., base station CU 1510-1 and base station CU 1510-2). In some aspects, the nodes may be included in a wireless network, such as wireless network 100.

The base station DUs 1505 may implement, may be implemented by, and/or may be associated with a base station 110, a TRP 308, a DU 406, a DU of a non-anchor base station 545, a DU of an IAB node 610, a DU 705, an upstream node 710, a downstream node 715, and/or an apparatus 1800 of Fig. 18. The base station CUs 1510 may implement, may be implemented by, and/or may be associated with a base station 110, an ANC 302, a C-RU 404, an anchor base station 535, an IAB donor 605, an upstream node 710, and/or an apparatus 1900 of Fig. 19.

In some aspects, the base station DUs 1505 and the base station CUs 1510 are non-IAB nodes. In some aspects, the base station DUs 1505 and/or the base station CUs 1510 are included in an IAB network such as one or more of the IAB networks illustrated and described above in connection with Fig. 5 and/or Fig. 6. In these examples, base station DU 1505-1 and base station DU 1505-2 may be associated with different IAB nodes, and base station CU 1510-1 and base station CU 1510-2 may be associated with different IAB donors. In some aspects, base station CU 1510-1 is associated with an IAB donor for the IAB nodes of base station DU 1505-1 and base station DU 1505-1. In some aspects, base station CU 1510-1 is associated with an IAB donor for the IAB node of base station DU 1505-1, and base station CU 1510-2 is associated with a different IAB donor for the IAB node of base station DU 1505-2.

Base station DU 1505-1 may be located near base station DU 1505-2 such that transmissions by base station DU 1505-2 in one or more cells of base station DU 1505-2 may cause inter-DU CLI with reception by base station DU 1505-1 in one or more cells of base station DU 1502-1. Accordingly, base station DU 1505-1 may be configured to perform CLI measurements of transmissions by base station DU 1505-2 (e.g., inter-DU CLI measurements). In some aspects, base station DU 1505-1 is configured by base station CU 1510-1 to perform CLI measurements. In some aspects, base station DU 1505-1 autonomously performs the CLI measurements. In some aspects, base station DU 1505-2 is configured by base station CU 1510-1 and/or base station CU 1510-2 to perform transmissions for which base station DU 1505-2 is to perform the CLI measurements.

As shown in Fig. 15, and by reference number 1515, base station DU 1505-1 may perform one or more CLI measurements of one or more transmissions by base station DU 1505-2. The one or more CLI measurements may include one or more measurement types described above, such as RSSI measurements, RSRP measurements, CQI measurements, SNR measurements, SINR measurements, and/or one or more other types of signal measurements. In some aspects, base station DU 1505-1 performs the one or more CLI measurement based at least in part on a CLI measurement reporting configuration.

As further shown in Fig. 15, and by reference number 1520, base station DU 1505-1 may transmit results of the one or more CLI measurements (and, in some examples, other information associated with the one or more CLI measurements) in a CLI measurement report to base station CU 1510-1. In some aspects, base station DU 1505-1 may configure the CLI measurement report to include one or more of the parameters described above in connection with Fig. 14 based at least in part on the CLI measurement reporting configuration. In some aspects, base station DU 1505-1 may transmit the CLI measurement report to base station CU 1510-1 based at least in part on the CLI measurement reporting configuration.

As further shown in Fig. 15, and by reference number 1525, base station CU 1510-1 may transmit the CLI measurement report to base station CU 1510-2. In some aspects, base station CU 1510-1 transmits an indication of one or more parameters included in the CLI measurement report to base station CU 1510-2. The one or more parameters may include the results of the one or more CLI measurements, the one or more recommended parameters for base station DU 1505-2, and/or one or more other parameters described above in connection with Fig. 14.

As further shown in Fig. 15, and by reference number 1530, base station CU 1510-2 may transmit the CLI measurement report (or the one or more parameters) to base station DU 1505-2. Base station DU 1505-2 may receive the CLI measurement report (or the subset of parameters), and may adjust various parameters of base station DU 1505-2 based at least in part on the CLI measurement report (or the one or more parameters) to mitigate, reduce, and/or eliminate inter-DU CLI between base station DU 1505-1 and base station DU 1505-2. For example, base station DU 1505-2 may adjust a TDD configuration, may adjust a transmit schedule, may adjust a receive schedule, may adjust a spatial transmission configuration, and/or the like.

As indicated above, Fig. 15 is provided as one or more examples. Other examples may differ from what is described with respect to Fig. 15.

Fig. 16 is a diagram illustrating an example process 1600 performed, for example, by a first base station DU, in accordance with the present disclosure. Example process 1600 is an example where the first base station DU (e.g., a base station 110, a TRP 308, a DU 406, a DU of a non-anchor base station 545, a DU of an IAB node 610, a DU 705, an upstream node 710, a downstream node 715, a base station DU 1405, a base station DU 1505, and/or an apparatus 1800) performs operations associated with inter-DU CLI measurement and reporting.

As shown in Fig. 16, in some aspects, process 1600 may include identifying a CLI measurement reporting configuration (block 1610). For example, the first base station DU (e.g., using identification component 1808, depicted in Fig. 18) may identify a CLI measurement reporting configuration, as described above.

As further shown in Fig. 16, in some aspects, process 1600 may include configuring, based at least in part on the CLI measurement reporting configuration, a CLI measurement report to include information associated with one or more CLI measurements for a second base station DU (block 1620). For example, the first base station DU (e.g., using configuration component 1810, depicted in Fig. 18) may configure, based at least in part on the CLI measurement reporting configuration, a CLI measurement report to include information associated with one or more CLI measurements for a second base station DU, as described above.

As further shown in Fig. 16, in some aspects, process 1600 may include transmitting the CLI measurement report (block 1630). For example, the first base station DU (e.g., using transmission component 1804, depicted in Fig. 18) may transmit the CLI measurement report, as described above.

Process 1600 may include additional aspects, such as any single aspect or any combination of aspects described below and/or in connection with one or more other processes described elsewhere herein.

In a first aspect, the CLI measurement report comprises a periodic CLI measurement report, an event-triggered CLI measurement report, a semi-persistent CLI measurement report, or a dynamic CLI measurement report. In a second aspect, alone or in combination with the first aspect, process 1600 includes receiving (e.g., using reception component 1802, depicted in Fig. 18) the CLI measurement reporting configuration from at least one of a base station CU, an OAM component, or the second base station DU. In a third aspect, alone or in combination with one or more of the first and second aspects, the CLI measurement reporting configuration indicates at least one of a CLI measurement object, a CLI measurement filtering parameter, one or more receive beams that the first base station DU is to use for the one or more CLI measurements, or one or more reporting parameters for the CLI measurement report.

In a fourth aspect, alone or in combination with one or more of the first through third aspects, the one or more reporting parameters comprise at least one of one or more measurement types for the one or more CLI measurements, an identifier of a cell of the second base station DU associated with a CLI measurement, of the one or more CLI measurements, that satisfies a measurement threshold, an identifier of a CLI measurement resource, for the second base station DU, associated with a CLI measurement of the one or more CLI measurements that satisfies a measurement threshold, a receive beam associated with the first base station DU used for the one or more CLI measurements, a transmit beam associated with the second base station DU used for one or more transmissions associated with the one or more CLI measurements, an estimated propagation delay between the first base station DU and the second base station DU, an estimated RTT between the first base station DU and the second base station DU, an interference level category for the first base station DU, or one or more recommended parameters for the first base station DU and/or the second base station DU.

In a fifth aspect, alone or in combination with one or more of the first through fourth aspects, the one or more CLI measurements associated with the second base station DU are associated with a plurality of aggressor cells of the second base station DU. In a sixth aspect, alone or in combination with one or more of the first through fifth aspects, the one or more CLI measurements associated with the second base station DU are associated with a particular quantity of strongest aggressor cells of the second base station DU. In a seventh aspect, alone or in combination with one or more of the first through sixth aspects, the one or more CLI measurements associated with the second base station DU are associated with a particular quantity of weakest aggressor cells of the second base station DU.

In an eighth aspect, alone or in combination with one or more of the first through seventh aspects, the one or more CLI measurements associated with the second base station DU are associated with a particular subset of aggressor cells of the second base station DU. In a ninth aspect, alone or in combination with one or more of the first through eighth aspects, transmitting the CLI measurement report comprises transmitting the CLI measurement report to a base station CU associated with the first base station DU. In a tenth aspect, alone or in combination with one or more of the first through ninth aspects, transmitting the CLI measurement report comprises transmitting the CLI measurement report to the second base station DU. In an eleventh aspect, alone or in combination with one or more of the first through tenth aspects, the first base station DU is associated with an IAB parent node, the second base station DU is associated with an IAB child node of the IAB parent node, and transmitting the CLI measurement report to the second base station DU comprises transmitting the CLI measurement report directly between the IAB parent node and the IAB child node.

In a twelfth aspect, alone or in combination with one or more of the first through eleventh aspects, the first base station DU is associated with an IAB child node, the second base station DU is associated with an IAB parent node of the IAB child node, and transmitting the CLI measurement report to the second base station DU comprises transmitting the CLI measurement report directly between the IAB parent node and the IAB child node. In a thirteenth aspect, alone or in combination with one or more of the first through twelfth aspects, transmitting the CLI measurement report comprises transmitting the CLI measurement report in transmit resources configured by a base station CU.

Although Fig. 16 shows example blocks of process 1600, in some aspects, process 1600 may include additional blocks, fewer blocks, different blocks, or differently arranged blocks than those depicted in Fig. 16. Additionally, or alternatively, two or more of the blocks of process 1600 may be performed in parallel.

Fig. 17 is a diagram illustrating an example process 1700 performed, for example, by a base station CU, in accordance with the present disclosure. Example process 1700 is an example where the base station CU (e.g., a base station 110, an ANC 302, a C-RU 404, an anchor base station 535, an IAB donor 605, an upstream node 710, a base station CU 1410, a base station CU 1510, and/or an apparatus 1900) performs operations associated with inter-DU CLI measurement and reporting.

As shown in Fig. 17, in some aspects, process 1700 may include receiving, from a first base station DU, a CLI measurement report associated with CLI measurement of a second base station DU, wherein the CLI measurement report is based at least in part on a CLI measurement reporting configuration (block 1710). For example, the base station CU (e.g., using reception component 1902, depicted in Fig. 19) may receive, from a first base station DU, a CLI measurement report associated with CLI measurement of a second base station DU, wherein the CLI measurement report is based at least in part on a CLI measurement reporting configuration, as described above. In some aspects, the CLI measurement report is based at least in part on a CLI measurement reporting configuration.

As further shown in Fig. 17, in some aspects, process 1700 may include configuring communications for at least one of the first base station DU and one or more other base stations based at least in part on the CLI measurement report (block 1720). For example, the base station CU (e.g., using configuration component 1908, depicted in Fig. 19) may configure communications for at least one of the first base station DU and one or more other base stations based at least in part on the CLI measurement report, as described above.

Process 1700 may include additional aspects, such as any single aspect or any combination of aspects described below and/or in connection with one or more other processes described elsewhere herein.

In a first aspect, process 1700 includes transmitting (e.g., using transmission component 1904, depicted in Fig. 19), to the first base station DU, the CLI measurement reporting configuration. In a second aspect, alone or in combination with the first aspect, the CLI measurement reporting configuration indicates at least one of a CLI measurement object, a CLI measurement filtering parameter, one or more receive beams that the first base station DU is to use for the one or more CLI measurements, or one or more reporting parameters for the CLI measurement report.

In a third aspect, alone or in combination with one or more of the first and second aspects, the one or more reporting parameters comprise at least one of one or more measurement types for the one or more CLI measurements, an identifier of a cell of the second base station DU associated with a CLI measurement, of the one or more CLI measurements, that satisfies a measurement threshold, an identifier of a CLI measurement resource, for the second base station DU, associated with a CLI measurement of the one or more CLI measurements that satisfies a measurement threshold, a receive beam associated with the first base station DU used for the one or more CLI measurements, a transmit beam associated with the second base station DU used for one or more transmissions associated with the one or more CLI measurements, an estimated propagation delay between the first base station DU and the second base station DU, an estimated RTT between the first base station DU and the second base station DU, an interference level category for the first base station DU, or one or more recommended parameters for the first base station DU and/or the second base station DU.

In a fourth aspect, alone or in combination with one or more of the first through third aspects, the first base station DU is associated with the base station CU, the second base station DU is associated with another base station CU, and process 1700 includes transmitting (e.g., using transmission component 1904, depicted in Fig. 19) the CLI measurement report to at least one of the second base station DU, or the other base station CU.

Although Fig. 17 shows example blocks of process 1700, in some aspects, process 1700 may include additional blocks, fewer blocks, different blocks, or differently arranged blocks than those depicted in Fig. 17. Additionally, or alternatively, two or more of the blocks of process 1700 may be performed in parallel.

Fig. 18 is a block diagram of an example apparatus 1800 for wireless communication. The apparatus 1800 may be a base station DU, or a base station DU may include the apparatus 1800. In some aspects, the apparatus 1800 includes a reception component 1802 and a transmission component 1804, which may be in communication with one another (for example, via one or more buses and/or one or more other components). As shown, the apparatus 1800 may communicate with another apparatus 1806 (such as a UE, a base station, or another wireless communication device) using the reception component 1802 and the transmission component 1804. As further shown, the apparatus 1800 may include one or more of an identification component 1808 and/or a configuration component 1810, among other examples.

In some aspects, the apparatus 1800 may be configured to perform one or more operations described herein in connection with Figs. 14 and/or 15. Additionally, or alternatively, the apparatus 1800 may be configured to perform one or more processes described herein, such as process 1600 of Fig. 16. In some aspects, the apparatus 1800 and/or one or more components shown in Fig. 18 may include one or more components of the base station described above in connection with Fig. 2. Additionally, or alternatively, one or more components shown in Fig. 18 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1802 may receive communications, such as reference signals, control information, data communications, or a combination thereof, from the apparatus 1806. The reception component 1802 may provide received communications to one or more other components of the apparatus 1800. In some aspects, the reception component 1802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1806. In some aspects, the reception component 1802 may include one or more antennas, a demodulator, a MIMO detector, a receive processor, a controller/processor, a memory, or a combination thereof, of the base station described above in connection with Fig. 2.

The transmission component 1804 may transmit communications, such as reference signals, control information, data communications, or a combination thereof, to the apparatus 1806. In some aspects, one or more other components of the apparatus 1806 may generate communications and may provide the generated communications to the transmission component 1804 for transmission to the apparatus 1806. In some aspects, the transmission component 1804 may perform signal processing on the generated communications (such as filtering, amplification, modulation, digital-to-analog conversion, multiplexing, interleaving, mapping, or encoding, among other examples), and may transmit the processed signals to the apparatus 1806. In some aspects, the transmission component 1804 may include one or more antennas, a modulator, a transmit MIMO processor, a transmit processor, a controller/processor, a memory, or a combination thereof, of the base station described above in connection with Fig. 2. In some aspects, the transmission component 1804 may be collocated with the reception component 1802 in a transceiver.

The identification component 1808 may identify a CLI measurement reporting configuration. In some aspects, the identification component 1808 may include one or more a receive processor, a transmit processor, a controller/processor, a memory, or a combination thereof, of the base station described above in connection with Fig. 2. The configuration component 1810 may configure, based at least in part on the CLI measurement reporting configuration, a CLI measurement report to include information associated with one or more CLI measurements for the apparatus 1806. In some aspects, the configuration component 1810 may include a receive processor, a transmit processor, a controller/processor, a memory, or a combination thereof, of the base station described above in connection with Fig. 2.

The reception component 1802 may receive the CLI measurement reporting configuration from a base station CU. The transmission component 1804 may transmit the CLI measurement report (e.g., to the apparatus 1806, the base station CU, an OAM component, and/or another node).

The number and arrangement of components shown in Fig. 18 are provided as an example. In practice, there may be additional components, fewer components, different components, or differently arranged components than those shown in Fig. 18. Furthermore, two or more components shown in Fig. 18 may be implemented within a single component, or a single component shown in Fig. 18 may be implemented as multiple, distributed components. Additionally, or alternatively, a set of (one or more) components shown in Fig. 18 may perform one or more functions described as being performed by another set of components shown in Fig. 18.

Fig. 19 is a block diagram of an example apparatus 1900 for wireless communication. The apparatus 1900 may be a base station CU, or a base station CU may include the apparatus 1900. In some aspects, the apparatus 1900 includes a reception component 1902 and a transmission component 1904, which may be in communication with one another (for example, via one or more buses and/or one or more other components). As shown, the apparatus 1900 may communicate with another apparatus 1906 (such as a UE, a base station, or another wireless communication device) using the reception component 1902 and the transmission component 1904. As further shown, the apparatus 1900 may include a configuration component 1908.

In some aspects, the apparatus 1900 may be configured to perform one or more operations described herein in connection with Figs. 14 and/or 15. Additionally, or alternatively, the apparatus 1900 may be configured to perform one or more processes described herein, such as process 1700 of Fig. 17. In some aspects, the apparatus 1900 and/or one or more components shown in Fig. 19 may include one or more components of the base station described above in connection with Fig. 2. Additionally, or alternatively, one or more components shown in Fig. 19 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1902 may receive communications, such as reference signals, control information, data communications, or a combination thereof, from the apparatus 1906. The reception component 1902 may provide received communications to one or more other components of the apparatus 1900. In some aspects, the reception component 1902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1906. In some aspects, the reception component 1902 may include one or more antennas, a demodulator, a MIMO detector, a receive processor, a controller/processor, a memory, or a combination thereof, of the base station described above in connection with Fig. 2.

The transmission component 1904 may transmit communications, such as reference signals, control information, data communications, or a combination thereof, to the apparatus 1906. In some aspects, one or more other components of the apparatus 1906 may generate communications and may provide the generated communications to the transmission component 1904 for transmission to the apparatus 1906. In some aspects, the transmission component 1904 may perform signal processing on the generated communications (such as filtering, amplification, modulation, digital-to-analog conversion, multiplexing, interleaving, mapping, or encoding, among other examples), and may transmit the processed signals to the apparatus 1906. In some aspects, the transmission component 1904 may include one or more antennas, a modulator, a transmit MIMO processor, a transmit processor, a controller/processor, a memory, or a combination thereof, of the base station described above in connection with Fig. 2. In some aspects, the transmission component 1904 may be collocated with the reception component 1902 in a transceiver.

The reception component 1202 may receive a CLI measurement report from the apparatus 1906. The CLI measurement report may be associated with CLI measurement for a base station DU and may be based at least in part on a CLI measurement reporting configuration. The transmission component 1204 may transmit the CLI measurement reporting configuration to the apparatus 1906. The transmission component 1204 may transmit the CLI measurement report (or one or more parameters included therein) to the base station DU, a base station CU, and/or another node. The configuration component 1908 may configure communications for at least one of the apparatus 1906 and/or one or more base stations based at least in part on the CLI measurement report. In some aspects, the configuration component 1908 may include a receive processor, a transmit processor, a controller/processor, a memory, or a combination thereof, of the base station described above in connection with Fig. 2.

The number and arrangement of components shown in Fig. 19 are provided as an example. In practice, there may be additional components, fewer components, different components, or differently arranged components than those shown in Fig. 19. Furthermore, two or more components shown in Fig. 19 may be implemented within a single component, or a single component shown in Fig. 19 may be implemented as multiple, distributed components. Additionally, or alternatively, a set of (one or more) components shown in Fig. 19 may perform one or more functions described as being performed by another set of components shown in Fig. 19.

The transmission component 1904 may transmit communications, such as reference signals, control information, data communications, or a combination thereof, to the apparatus 1906. In some aspects, one or more other components of the apparatus 1906 may generate communications and may provide the generated communications to the transmission component 1904 for transmission to the apparatus 1906. In some aspects, the transmission component 1904 may perform signal processing on the generated communications (such as filtering, amplification, modulation, digital-to-analog conversion, multiplexing, interleaving, mapping, or encoding, among other examples), and may transmit the processed signals to the apparatus 1906. In some aspects, the transmission component 1904 may include one or more antennas, a modulator, a transmit MIMO processor, a transmit processor, a controller/processor, a memory, or a combination thereof, of the base station described above in connection with Fig. 2. In some aspects, the transmission component 1904 may be collocated with the reception component 1902 in a transceiver.

The reception component 1202 may receive a CLI measurement report from the apparatus 1906. The CLI measurement report may be associated with CLI measurement for a base station DU and may be based at least in part on a CLI measurement reporting configuration. The transmission component 1204 may transmit the CLI measurement reporting configuration to the apparatus 1906. The transmission component 1204 may transmit the CLI measurement report (or one or more parameters included therein) to the base station DU, a base station CU, and/or another node. The configuration component 1908 may configure communications for at least one of the apparatus 1906 and/or one or more base stations based at least in part on the CLI measurement report. In some aspects, the configuration component 1908 may include a receive processor, a transmit processor, a controller/processor, a memory, or a combination thereof, of the base station described above in connection with Fig. 2.

The foregoing disclosure provides illustration and description, but is not intended to be exhaustive or to limit the aspects to the precise form disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method of wireless communication performed by a first base station distributed unit, DU, comprising:
identifying (1010), based at least in part on information associated with a second base station DU, one or more resources for crosslink interference, CLI, measurement for the second base station DU; and
performing (1020) one or more CLI measurements for a cell associated with the second base station DU based at least in part on the one or more resources, wherein the information associated with the second base station DU comprises:
system information identifying the one or more resources,
wherein the method further comprises:
receiving the system information from the second base station DU in at least one of:
a master information block, MIB, or
a system information block, SIB.

2. The method of claim 1, wherein the information associated with the second base station DU comprises:
information identifying a time division duplexing, TDD, configuration for the cell associated with the second base station DU; and wherein the method further comprises:
receiving the information identifying the TDD configuration from a base station central unit, CU.

3. The method of claim 1, wherein the first base station DU is associated with an integrated access and backhaul, IAB, node; and
wherein the method further comprises:
receiving the information associated with the second base station DU by a mobile terminal, MT, associated with the IAB node.

4. The method of claim 1, wherein the first base station DU is associated with an integrated access and backhaul, IAB, parent node;
wherein the second base station DU is associated with an IAB child node of the IAB parent node; and
wherein the method further comprises:
receiving the information associated with the second base station DU in a resource configuration associated with the IAB child node.

5. The method of claim 1, wherein the first base station DU is associated with an integrated access and backhaul, IAB, child node;
wherein the second base station DU is associated with an IAB parent node of the IAB child node; and
wherein the method further comprises:
receiving the information associated with the second base station DU in a resource configuration associated with the IAB parent node.

6. The method of claim 1, wherein the information associated with the second base station DU comprises:
one or more CLI measurement objects for the cell associated with the second base station DU; and
wherein the method further comprises:
receiving the one or more CLI measurement objects from a base station central unit, CU,
wherein the one or more CLI measurement objects identify at least one of:
the one or more resources,
a measurement window for the one or more CLI measurements,
a subcarrier spacing, SCS, for the cell associated with the second base station DU,
a reference signal configuration associated with the second base station DU,
a cell identifier associated with the second base station DU, or
an index of transmitted synchronization signal blocks, SSBs, associated with the second base station DU.

7. The method of claim 1, wherein the information associated with the second base station DU comprises:
information identifying a resource configuration for the cell associated with the second base station DU; and
wherein the method further comprises:
receiving the information identifying the resource configuration from a base station central unit, CU.

8. The method of claim 1, wherein performing the one or more CLI measurements comprises:
performing the one or more CLI measurements based at least in part on one or more reference signals transmitted from the second base station DU in the one or more resources,
wherein the one or more reference signals comprise at least one of:
a synchronization signal block, SSB,
a channel state information reference signal, CSI-RS,
a remote interference management reference signal, RIM-RS,
a phase tracking reference signal, PTRS, or
a demodulation reference signal, DMRS.

9. The method of claim 1, wherein performing the one or more CLI measurements comprises:
performing one or more received signal strength indicator, RSSI, measurements based at least in part on one or more CLI-RSSI transmissions from the second base station DU in the one or more resources.

10. A first base station distributed unit, DU, comprising:
means for identifying, based at least in part on information associated with a second base station DU, one or more resources for crosslink interference, CLI, measurement for the second base station DU; and
means for performing one or more CLI measurements for a cell associated with the second base station DU based at least in part on the one or more resources, wherein the information associated with the second base station DU comprises:
system information identifying the one or more resources,
wherein the first base station DU further comprises:
means for receiving the system information from the second base station DU in at least one of:
a master information block, MIB, or
a system information block, SIB.

11. The first base station DU, further comprising means for performing a method according to any of claims 2 to 9.

## Patentansprüche

1. Verfahren zur drahtlosen Kommunikation, das von einer ersten verteilten Basisstationseinheit, DU, durchgeführt wird, umfassend:
Identifizieren (1010), zumindest teilweise basierend auf Informationen, die mit einer zweiten Basisstations-DU assoziiert sind, einer oder mehrerer Ressourcen zur Messung von Netzwerkinterferenz, CLI, für die zweite Basisstations-DU; und
Durchführen (1020) einer oder mehrerer CLI-Messungen für eine Zelle, die mit der zweiten Basisstations-DU assoziiert ist, zumindest teilweise basierend auf der einen oder den mehreren Ressourcen, wobei die Informationen, die mit der zweiten Basisstations-DU assoziiert sind, umfassen:
Systeminformationen, die die eine oder die mehreren Ressourcen identifizieren,
wobei das Verfahren ferner umfasst:
Empfangen der Systeminformationen von der zweiten Basisstations-DU in mindestens einem von:
einem Master-Informationsblock, MIB, oder
einem Systeminformationsblock, SIB.

2. Verfahren nach Anspruch 1, wobei die mit der zweiten Basisstations-DU assoziierten Informationen umfassen:
Informationen, die eine Zeitduplex-Konfiguration, TDD-Konfiguration, für die mit der zweiten Basisstations-DU assoziierte Zelle identifizieren; und wobei das Verfahren ferner umfasst:
Empfangen der die TDD-Konfiguration identifizierenden Informationen von einer zentralen Basisstationseinheit, CU.

3. Verfahren nach Anspruch 1, wobei die erste Basisstations-DU mit einem integrierten Zugangs- und Backhaul-Knoten, IAB-Knoten, assoziiert ist; und
wobei das Verfahren ferner umfasst:
Empfangen der mit der zweiten Basisstations-DU assoziierten Informationen durch ein mobiles Endgerät, MT, das mit dem IAB-Knoten assoziiert ist.

4. Verfahren nach Anspruch 1, wobei die erste Basisstations-DU mit einem integrierten Zugangs- und Backhaul-Elternknoten, IAB-Elternknoten, assoziiert ist;
wobei die zweite Basisstations-DU mit einem IAB-Kindknoten des IAB-Elternknotens assoziiert ist; und
wobei das Verfahren ferner umfasst:
Empfangen der mit der zweiten Basisstations-DU assoziierten Informationen in einer mit dem IAB-Kindknoten assoziierten Ressourcenkonfiguration.

5. Verfahren nach Anspruch 1, wobei die erste Basisstations-DU mit einem integrierten Zugangs- und Backhaul-Kindknoten, IAB-Kindknoten, assoziiert ist;
wobei die zweite Basisstations-DU mit einem IAB-Elternknoten des IAB-Kindknotens assoziiert ist; und
wobei das Verfahren ferner umfasst:
Empfangen der mit der zweiten Basisstations-DU assoziierten Informationen in einer mit dem IAB-Elternknoten assoziierten Ressourcenkonfiguration.

6. Verfahren nach Anspruch 1, wobei die mit der zweiten Basisstations-DU assoziierten Informationen umfassen:
ein oder mehrere CLI-Messobjekte für die mit der zweiten Basisstations-DU assoziierte Zelle; und
wobei das Verfahren ferner umfasst:
Empfangen des einen oder der mehreren CLI-Messobjekte von einer zentralen Basisstationseinheit, CU,
wobei das eine oder die mehreren CLI-Messobjekte mindestens eines der Folgenden identifizieren:
die eine oder die mehreren Ressourcen,
ein Messfenster für die eine oder die mehreren CLI-Messungen,
einen Unterträgerabstand, SCS, für die mit der zweiten Basisstations-DU assoziierte Zelle,
eine mit der zweiten Basisstations-DU assoziierte Referenzsignalkonfiguration,
eine mit der zweiten Basisstations-DU assoziierte Zellenkennung, oder
einen Index von übertragenen Synchronisationssignalblöcken, SSBs, die mit der zweiten Basisstations-DU assoziiert sind.

7. Verfahren nach Anspruch 1, wobei die mit der zweiten Basisstations-DU assoziierten Informationen umfassen:
Informationen, die eine Ressourcenkonfiguration für die mit der zweiten Basisstations-DU assoziierte Zelle identifizieren; und
wobei das Verfahren ferner umfasst:
Empfangen der die Ressourcenkonfiguration identifizierenden Informationen von einer zentralen Basisstationseinheit, CU.

8. Verfahren nach Anspruch 1, wobei das Durchführen der einen oder der mehreren CLI-Messungen umfasst:
Durchführen der einen oder der mehreren CLI-Messungen zumindest teilweise basierend auf einem oder mehreren Referenzsignalen, die von der zweiten Basisstations-DU in der einen oder den mehreren Ressourcen übertragen werden,
wobei das eine oder die mehreren Referenzsignale mindestens eines umfassen von:
einem Synchronisationssignalblock, SSB,
einem Kanalzustandsinformations-Referenzsignal, CSI-RS,
einem Ferninterferenzverwaltungs-Referenzsignal, RIM-RS,
einem Phasenverfolgungs-Referenzsignal, PTRS, oder
einem Demodulations-Referenzsignal, DMRS.

9. Verfahren nach Anspruch 1, wobei das Durchführen der einen oder der mehreren CLI-Messungen umfasst:
Durchführen einer oder mehrerer Empfangssignalstärkeindikator-, RSSI-, Messungen zumindest teilweise basierend auf einer oder mehreren CLI-RSSI-Übertragungen von der zweiten Basisstations-DU in der einen oder den mehreren Ressourcen.

10. Erste verteilte Basisstationseinheit, DU, umfassend:
Mittel zum Identifizieren, zumindest teilweise basierend auf Informationen, die mit einer zweiten Basisstations-DU assoziiert sind, einer oder mehrerer Ressourcen zur Messung von Netzwerkinterferenz, CLI, für die zweite Basisstations-DU; und
Mittel zum Durchführen einer oder mehrerer CLI-Messungen für eine Zelle, die mit der zweiten Basisstations-DU assoziiert ist, zumindest teilweise basierend auf der einen oder den mehreren Ressourcen, wobei die Informationen, die mit der zweiten Basisstations-DU assoziiert sind, umfassen:
Systeminformationen, die die eine oder die mehreren Ressourcen identifizieren,
wobei die erste Basisstations-DU ferner umfasst:
Mittel zum Empfangen der Systeminformationen von der zweiten Basisstations-DU in mindestens einem von:
einem Master-Informationsblock, MIB, oder
einem Systeminformationsblock, SIB.

11. Erste Basisstations-DU, ferner umfassend Mittel zum Durchführen eines Verfahrens nach einem der Ansprüche 2 bis 9.

## Revendications

1. Un procédé de communication sans fil réalisé par une première unité distribuée, DU, de station de base, comprenant :
l'identification (1010), sur la base au moins en partie d'informations associées à une seconde DU de station de base, d'une ou plusieurs ressources pour une mesure d'interférence mutuelle entre liaisons, CLI, pour la seconde DU de station de base ; et
la réalisation (1020) d'une ou plusieurs mesures de CLI pour une cellule associée à la seconde DU de station de base sur la base au moins en partie des une ou plusieurs ressources, dans lequel les informations associées à la seconde DU de station de base comprennent :
des informations système identifiant les une ou plusieurs ressources,
dans lequel le procédé comprend en outre :
la réception des informations système de la seconde DU de station de base dans au moins un parmi :
un bloc d'informations maître, ou
un bloc d'informations système, SIB.

2. Le procédé selon la revendication 1, dans lequel les informations associées à la seconde DU de station de base comprennent :
des informations identifiant une configuration de duplexage par répartition dans le temps, TDD, pour la cellule associée à la seconde DU de station de base ; et
dans lequel le procédé comprend en outre :
la réception des informations identifiant la configuration TDD à partir d'une unité centrale, CU, de station de base.

3. Le procédé selon la revendication 1, dans lequel la première DU de station de base est associée à un nœud d'accès et de backhaul intégrés, IAB ; et
dans lequel le procédé comprend en outre :
la réception des informations associées à la seconde DU de station de base par un terminal mobile, MT, associé au nœud IAB.

4. Le procédé selon la revendication 1, dans lequel la première DU de station de base est associée à un nœud parent, d'accès et de backhaul intégrés, IAB ;
dans lequel la seconde DU de station de base est associée à un nœud fils IAB du nœud parent IAB ; et
dans lequel le procédé comprend en outre :
la réception des informations associées à la seconde DU de station de base dans une configuration de ressources associée au nœud fils IAB.

5. Le procédé selon la revendication 1, dans lequel la première DU de station de base est associée à un nœud fils, d'accès et de backhaul intégrés, IAB ;
dans lequel la seconde DU de station de base est associée à un nœud parent IAB du nœud fils IAB ; et
dans lequel le procédé comprend en outre :
la réception des informations associées à la seconde DU de station de base dans une configuration de ressource associée au nœud parent IAB.

6. Le procédé selon la revendication 1, dans lequel les informations associées à la seconde DU de station de base comprennent :
un ou plusieurs objets de mesure de CLI pour la cellule associée à la seconde DU de station de base ; et
dans lequel le procédé comprend en outre :
la réception des un ou plusieurs objets de mesure de CLI à partir d'une unité centrale de station de base, CU,
dans lequel les un ou plusieurs objets de mesure d CLI identifient au moins un parmi :
les une ou plusieurs ressources,
une fenêtre de mesure pour les une ou plusieurs mesures de CLI,
un espacement de sous-porteuse, SCS, pour la cellule associée à la seconde DU de station de base,
une configuration de signal de référence associée à la seconde DU de station de base,
un identifiant de cellule associé à la seconde DU de station de base, ou
un indice de blocs de signal de synchronisation, SSB, transmis associés à la seconde DU de station de base.

7. Le procédé selon la revendication 1, dans lequel les informations associées à la seconde DU de station de base comprennent :
des informations identifiant une configuration de ressources pour la cellule associée à la seconde DU de station de base ; et
dans lequel le procédé comprend en outre :
la réception des informations identifiant la configuration de ressources à partir d'une unité centrale, CU, de station de base.

8. Le procédé selon la revendication 1, dans lequel la réalisation des une ou plusieurs mesures de CLI comprend :
la réalisation des une ou plusieurs mesures de CLI sur la base au moins en partie d'un ou plusieurs signaux de référence transmis par la seconde DU de station de base dans les une ou plusieurs ressources,
dans lequel les un ou plusieurs signaux de référence comprennent au moins un parmi :
un bloc de signal de synchronisation, SSB,
un signal de référence d'information d'état de canal, CSI-RS ,
un signal de référence de gestion d'interférences à distance, RIM-RS,
un signal de référence de suivi de phase, PTRS ;
un signal de référence de démodulation, DMRS.

9. Le procédé selon la revendication 1, dans lequel la réalisation des une ou plusieurs mesures de CLI comprend :
la réalisation d'une ou plusieurs mesures d'indicateur d'intensité de signal reçu, RSSI, sur la base au moins en partie d'une ou plusieurs transmissions CLI-RSSI provenant de la seconde DU de station de base dans les une ou plusieurs ressources.

10. Une première unité distribuée, DU, de station de base comprenant :
un moyen pour identifier, sur la base au moins en partie d'informations associées à une seconde DU de station de base, d'une ou plusieurs ressources pour une mesure d'interférence mutuelle entre liaisons, CLI, pour la seconde DU de station de base ; et
un moyen pour réaliser une ou plusieurs mesures de CLI pour une cellule associée à la seconde DU de station de base sur la base au moins en partie des une ou plusieurs ressources, dans lequel les informations associées à la seconde DU de station de base comprennent :
des informations système identifiant les une ou plusieurs ressources, dans lequel la première station de base DU comprend en outre :
un moyen pour recevoir les informations système à partir de la seconde DU de station de base dans au moins un parmi :
un bloc d'informations maître, ou
un bloc d'informations système, SIB.

11. La première DU de station de base, comprenant en outre des moyens pour réaliser un procédé selon l'une des revendications 2 à 9.
